(19) Europäisches Patentamt
European Patent Office
Office européen des brevets

(11) **EP 3 150 882 B1**

(12) **FASCICULE DE BREVET EUROPEEN**

(45) Date de publication et mention de la délivrance du brevet:
**06.11.2024 Bulletin 2024/45**

(21) Numéro de dépôt: **16191116.9**

(22) Date de dépôt: **28.09.2016**

(51) Classification Internationale des Brevets (IPC):
**F16G 13/07** (2006.01)     **F16G 13/06** (2006.01)
**B27B 17/00** (2006.01)

(52) Classification Coopérative des Brevets (CPC):
**F16G 13/07; B27B 33/14; F16G 13/06**

(54) **ÉLÉMENT MODULAIRE DE CHAÎNE PRÉSENTANT DES TOURILLONS À PIVOTEMENT LIBRE ET COUPLES DE FROTTEMENT ÉQUILIBRÉS, ET CHAÎNES DOTÉES DE TELS ÉLÉMENTS**

MODULELEMENT EINER KETTE, DAS ÜBER FREI SCHWENKBARE LAGERZAPFEN UND AUSGEWOGENE REIBPAARE VERFÜGT, UND MIT SOLCHEN ELEMENTEN AUSGESTATTETE KETTEN

MODULAR CHAIN ELEMENT HAVING FREELY PIVOTING PINS AND BALANCED FRICTION TORQUES, AND CHAINS PROVIDED WITH SUCH ELEMENTS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.09.2015 FR 1559290**
**12.08.2016 FR 1657756**

(43) Date de publication de la demande:
**05.04.2017 Bulletin 2017/14**

(73) Titulaires:
• **Guerif, Sébastien**
**49400 Saumur (FR)**
• **Couchot, Patrick**
**49680 Neuille (FR)**

(72) Inventeurs:
• **Guerif, Sébastien**
**49400 Saumur (FR)**
• **Couchot, Patrick**
**49680 Neuille (FR)**

(74) Mandataire: **Cabinet Camus Lebkiri**
**25 rue de Maubeuge**
**75009 Paris (FR)**

(56) Documents cités:
FR-A5- 2 055 876     US-A- 2 529 858
US-A- 3 231 069     US-A- 4 050 323
US-A- 5 542 326     US-A- 945 599

## Description

L'invention se rapporte au domaine technique des chaînes constituées d'une succession de maillons dont chaque extrémité s'articule sur un tourillon qui est libre en rotation autour d'au moins un des deux maillons qui s'y articulent. L'assemblage itératif maillon-tourillon, reproduit un grand nombre de fois, constitue donc la chaîne au sens du présent document, L'invention est particulièrement avantageuse pour les chaînes de sciage, où généralement alternent deux types de maillons. Mais elle est également avantageuse pour les chaînes dont tous les maillons sont identiques, ainsi que pour les chaînes s'engrenant sur des pignons multiples, comme par exemple les chaînes de levage (simplification à 2 flasques sur les schémas).

Si les chaînes sont a priori des composants mécaniques robustes, leur usure et leur rupture constitue un problème technique important dans les domaines où la fiabilité et la disponibilité importent, ainsi que dans tous les environnements hostiles pour lesquels leur remplacement peut dépasser de loin le simple coût du composant. C'est par exemple le cas des environnements sous-marin, nucléaire, spatial, médical.

Par ailleurs, dans le cas particulier des chaînes de coupe, celles-ci sont munies d'outils de coupe constitués d'au moins une pastille en matériau dur (en acier dur pour la coupe du bois, en carbure de tungstène ou en diamant pour la coupe de pierre) ayant une forme coupante qui la rend apte à entamer le matériau (pour le sciage du bois, l'expression outil de coupe est généralement remplacée par l'expression gouge de coupe). Ils sont souvent fixés à la chaine par une pièce intermédiaire appelée porte outil, sur laquelle ils sont généralement brasés. Le coût de ces outils de coupe dépasse de beaucoup celui des autres composants de la chaîne, et la rupture d'un maillon entraine souvent des dommages sur d'autres composants, ce qui augmente d'autant le temps de réparation et, in fine, le coût de remise en état.

L'invention concerne tous les types de chaîne constitués d'une succession de maillons et de tourillon, en alternance. Pour la décrire de la manière la plus générale, il convient donc de préciser certains termes.

On appelle communément maillon de la chaîne un élément mécanique modulaire assemblé itérativement à d'autres maillons par l'intermédiaire d'un tourillon constituant un axe mécanique de rotation. Pour des raisons de symétrie, une extrémité de maillon s'articule sur le tourillon afférent soit au milieu de cet axe mécanique, et alors cette extrémité de maillon est dite interne, soit à ses deux extrémités par deux parties plates alésées dont les axes sont placés en vis-à-vis, et alors l'extrémité de maillon est dite externe. Un même maillon peut donc avoir :

- une extrémité intérieure et une extrémité extérieure : il est alors dit maillon mixte
- ses deux extrémités intérieures : il est alors dit maillon intérieur
- ses deux extrémités extérieures : il est alors dit maillon extérieur.

Il va de soi que lorsque les maillons sont mixtes, ils sont tous identiques sauf si l'on choisit de fixer sur certains d'entre eux un outil quelconque (par exemple de coupe ou d'entrainement d'objets que doit transporter la chaîne) ou encore un élément de guidage et/ou d'entrainement de la chaîne par une poulie d'entrainement. A l'inverse, lorsqu'ils sont intérieurs ou extérieurs, ils sont nécessairement associés par paires, l'un d'eux étant intérieur et l'autre extérieur, à l'instar de la chaîne de vélo. Ces chaines sont dites alternées. C'est dans cette famille que se trouvent généralement les chaînes de coupe, l'outil ou le porte outil de coupe étant généralement fixé sur le corps d'un maillon extérieur. Dans quelques cas comme les chaines de levage, qui ressemblent à une association d'une multitude de chaines de vélo ayant chaque fois un commun leurs maillons externes, le nombre de parties plates alésées est multiplié pour accroitre la résistance en traction, et il existe alors plusieurs parties centrales sur lesquelles s'articulent le tourillon suivant : ce cas ne sera pas détaillé car il découle de manière évidente des chaine où le tourillon comporte trois zones d'articulation, et où il n'y a que deux maillons externes. L'invention lui est aisément extrapolable.

**Définitions générales** :

Pour une chaine mixte, on débute l'assemblage d'une chaîne par un quelconque maillon, et on lui associe itérativement un maillon identique, et ainsi de suite. Pour une chaine alternée en revanche, il serait difficile de réaliser un assemblage itératif au sens le plus formel avec des éléments aux extrémités incompatibles. Il est donc évident que dans le cas de chaines alternées, l'un des éléments est interne et l'autre est l'élément externe complémentaire, et vice versa. Dans ce cas, un assemblage itératif des maillons ne se fait donc pas stricto sensu mais de manière alternée. Comme on associe en alternance un premier élément puis l'élément complémentaire, avant de réitérer le cycle d'assemblage, on définit comme une **itération alternée** une telle association pour constituer une chaine alternée.

Lorsque les maillons sont mixtes, l'itération alternée revient à une itération où les éléments sont tous identiques..

Ainsi on peut présenter toutes les chaines comme résultant d'un assemblage par itération alternée des maillons.

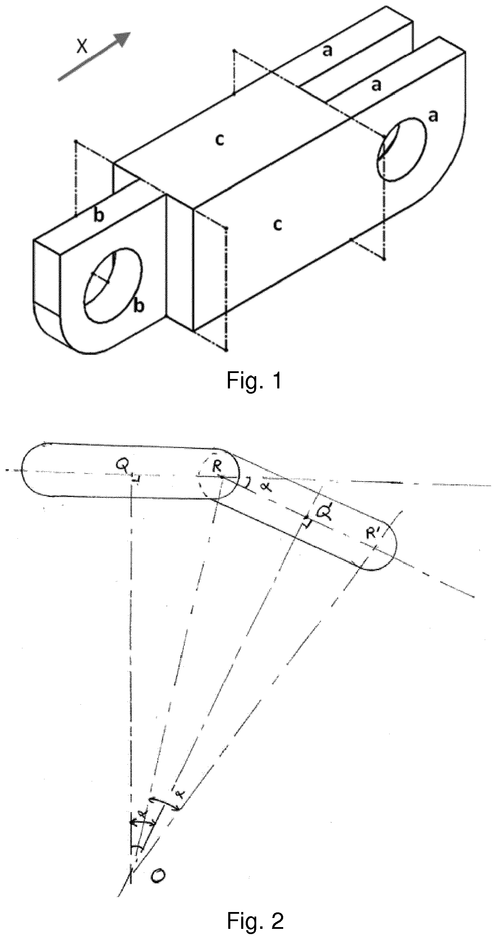

Du point de vue topologique et fonctionnel, un maillon peut être décomposé en trois parties, indépendamment des pièces qui le constituent et se prolongent généralement sur ces trois parties. On les définit comme suit en relation avec la Fig. 1 :

a) une extrémité amont par rapport au sens de déplacement X de la chaîne, ce qui revient à dire que lorsque la chaîne passe devant un obstacle fixe (lié par exemple à un carter), c'est cette extrémité qui apparaît en premier. Elle a pour fonction d'accrocher le maillon au tourillon précédent et d'entrainer ce maillon en mouvement. Ici cette extrémité est extérieure et à ce titre appelée (a).

b) une extrémité avale par rapport au sens de déplacement de la chaîne, ce qui revient à dire que lorsque la chaîne passe devant un obstacle fixe (lié par exemple à un carter), c'est cette extrémité qui apparaît en dernier. Elle a pour fonction d'accrocher le maillon au tourillon suivant, et donc de transmettre le mouvement à la partie avale de la chaîne. Ici cette extrémité est intérieure et à ce titre appelée (b).

c) un corps (c) reliant les deux extrémités amont et aval, qui détermine la distance entre deux tourillons successifs et donc le rayon de courbure minimal de la chaîne. Pour une chaîne de sciage, c'est ce corps du maillon qui porte les outils de coupe, soit directement soit, s'il existe un porte-outil intermédiaire, indirectement.

On rappelle que pour l'homme du métier, un porte outil est une pièce mécanique intermédiaire facile à monter et démonter sur le corps du maillon, et sur laquelle est fixé l'outil de coupe proprement dit, généralement par brasure. Pour une chaîne de transfert, c'est le corps du maillon qui porte un éventuel ergot d'entrainement ou de fixation.

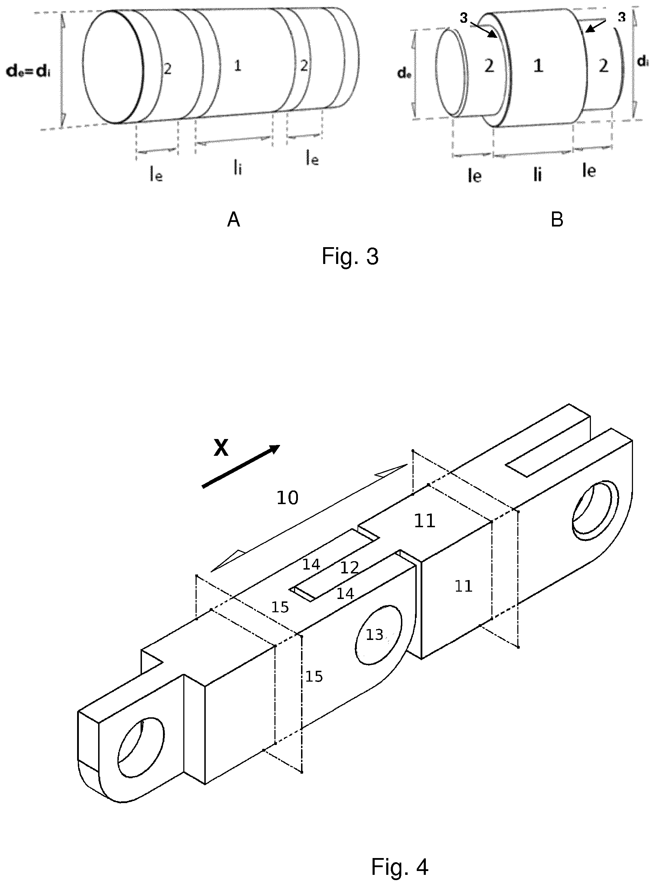

Du point de vue du tourillon, on remarque qu'un même tourillon voit toujours s'articuler sur lui une extrémité intérieure d'un maillon, c'est-à-dire l'extrémité d'un demi-maillon intérieur, et une extrémité extérieure du maillon adjacent, c'est-à-dire l'extrémité du demi-maillon extérieur adjacent. La Fig. 3 montre les diverses zones de contact d'un tourillon avec les maillons qui s'y articulent, en Fig. 3A le tourillon est sans épaulement, et en Fig. 3B il possède deux épaulements 3. Ces zones sont :

- soit la zone centrale 1 du tourillon, de longueur axiale $l_i$, qui coopère avec l'alésage de l'extrémité intérieure d'un premier maillon,

- soit aux deux extrémités de ce tourillon, les zones distales 2 qui coopèrent avec les alésages de chacun des bras d'une extrémité extérieure d'un second maillon, chacune ayant une longueur axiale $l_e$. On rappelle que dans la géométrie concernée, l'homme du métier appelle bras chaque élément s'étendant parallèlement au plan de déplacement de la chaîne et comportant un alésage coopérant avec le tourillon.

Dès que les contraintes mécaniques sont fortes ou qu'on veut se prémunir contre la casse de la chaîne, l'homme du métier choisit naturellement $l_i = \Sigma\ l_e = 2\ l_e.$, afin de rendre égales les sections travaillant à l'arrachement de part et d'autre de l'alésage, dans un plan orthogonal à l'axe de symétrie de la chaîne qui est aussi celui de son mouvement.

Enfin, lorsqu'une chaîne s'enroule sur une poulie, la face en contact avec la poulie est dite face interne de la chaîne (c'est elle qui a alors le plus petit rayon de courbure), et la face opposée est dite face externe (c'est elle qui a alors le plus grand rayon de courbure). C'est généralement sur la face interne que sont fixés les éléments de guidage ou d'entrainement de la chaîne, et sur la face externe que sont fixés les éléments de travail utile de la chaîne. S'il y a plusieurs poulies, chaque poulie peut déterminer une face intérieure et une face extérieures, mais dans ce qui suit on s'attachera pour cette définition à la poulie qui supporte le plus de contraintes. Dans le cas d'une chaîne de coupe, c'est celle qui est dirigée vers l'attaque du matériau à entailler.

De manière spécifique à cette invention, la caractérisation ne porte pas tant sur un maillon tel que défini ci-dessus, que sur l'articulation de deux demi maillons autour d'un tourillon. C'est pourquoi l'invention se définit comme un élément modulaire comportant un demi-maillon, un tourillon et l'autre demi-maillon qui s'articule sur ce même tourillon.

**Définition spécifique à l'invention** :

Dans le cas des chaines alternées, l'élément selon l'invention présente deux modalités complémentaires qui doivent elles aussi alternées. Par exemple, à la suite d'un premier élément modulaire de chaine selon l'invention débutant par une extrémité externe et se terminant par une extrémité interne, on associe en alternance un second élément modulaire de chaine selon l'invention, dont l'ordre est inverse du premier, c'est-à-dire ici débutant par une extrémité interne et se terminant par une extrémité externe. Une telle association alternée pour constituer une chaine alternée est définie ici comme une **itération alternée.**

Lorsque les maillons sont mixtes, l'itération alternée revient à une itération où les éléments sont tous identiques..

Dans le cas d'une chaîne alternée, la constitution d'une chaine résulte d'un assemblage par itération alternée des maillons.

Pour cette raison, en relation avec la Fig. 4, la présente invention définit un élément modulaire de chaîne 10 qu'elle définit comme centré sur le tourillon plutôt que sur le corps d'un maillon, cet élément modulaire 10 étant apte à constituer une chaîne par assemblage selon une itération alternée, et comportant :

- un tourillon 13 constituant un axe de rotation à symétrie cylindrique pouvant avoir plusieurs diamètres de même axe
- un demi-maillon intérieur 11 comportant une extrémité intérieure 12 s'articulant sur le dit tourillon et la moitié afférente du corps du dit maillon, délimité selon une section transversale à l'axe X du mouvement de la chaîne ; selon la Fig. 4, si le sens du mouvement est X comme sur la Fig. 1, ce demi-maillon intérieur est un demi maillon aval

- un demi-maillon extérieur 15 comportant une extrémité extérieure 14 s'articulant sur le dit tourillon 13 et la moitié afférente du corps du dit maillon, délimité selon une section transversale à l'axe X du mouvement de la chaîne

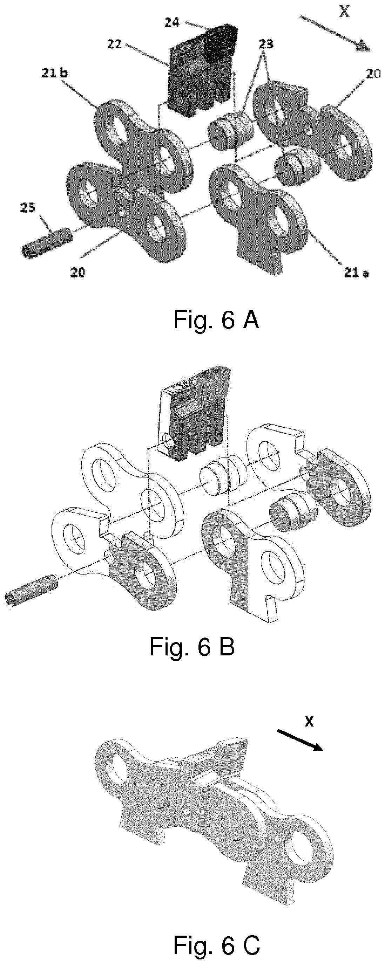

Un autre exemple d'élément modulaire de chaîne selon l'invention est montré Fig. 6 en grisé.

Lorsque les maillons sont mixtes, l'itération alternée revient à une itération où les éléments sont tous identiques.

Lorsque les maillons sont alternés, la constitution d'une chaine résulte d'un assemblage par itération alternée des maillons.

Comme on le voit, cet élément ne coïncide pas avec les pièces mécaniques, mais l'association itérative alternée d'un grand nombre de ces éléments constitue bien une chaîne.

**L'art antérieur** divulgue essentiellement des réalisations où, à l'instar de la chaîne de vélo, le tourillon est, du point de vue de sa rotation autour de son axe de symétrie, rendu solidaire du maillon intérieur ou du maillon extérieur qui s'articule dessus. En pratique, il est presque toujours solidaire du maillon extérieur. Alors l'autre extrémité du maillon solidaire de ce tourillon est reliée au tourillon suivant par une liaison mécanique cylindrique libre en rotation. Cela revient à dire que ladite rotation peut s'effectuer avec des frottements faibles devant les forces induites par la traction sur la chaîne.

Lors de l'adaptation de telles chaînes au sciage, l'homme du métier concentre son attention sur l'outil de coupe, comme dans le document EP-A1-1 155 796 (Belotti). Il concerne une chaîne de sciage de pierre, constituée d'une pluralité de maillons identiques (chaîne mixte) reliés par des tourillons. Ces maillons portent des outils diamantés 3.

Dans le premier mode de réalisation, cette chaîne est entraînée par des évidements semi-circulaires au droit des tourillons qui coopèrent avec la poulie d'entraînement. Chaque maillon présente une extrémité, extérieure, formée par deux branches de réception, positionnées en vis-à-vis et définissant un espace interne. Chacune de ces branches est dotée d'un alésage 10, en vis à vis sur les deux branches, dont nous appellerons le diamètre $D_{réc}$ le diamètre intérieur. Chaque maillon possède également une deuxième extrémité, intérieure, formée par une branche d'insertion dotée d'un alésage 7 de diamètre $D_{ins}$ intérieur. L'un des deux diamètres $D_{réc}$, $D_{ins}$, est plus petit que l'autre, et très légèrement plus petit que le diamètre extérieur du tourillon qui est alors monté à force à travers l'emboitement de deux maillons consécutifs. Ce montage évite au tourillon la sortie de son alésage, mais le rend solidaire en rotation du maillon dont l'alésage est le plus petit.

Cette même solidarisation du tourillon avec le maillon extérieur se retrouve dans les chaines de coupe pour le bois. Le document US-B2-6 857 349 (Duquet) divulgue une chaine de coupe alternée ayant un outil de coupe dissymétrique. Un premier type est monté alternativement sur le côté droit d'un premier maillon extérieur, et de façon complémentaire un second type d'outil de coupe, symétrique du premier, est monté sur le côté gauche d'un troisième maillon extérieur. Les deuxième et quatrième maillons extérieurs ne portent aucun outil de coupe. Enfin, chacun de ces outils tranchants est immédiatement précédé d'un talon de régulation et calibrage, le « rocker » 5, 6, qui contrôle l'engagement de l'outil tranchant dans le bois et amortit les vibrations de la chaîne. Il est flagrant que les problèmes d'usure ne sont envisagés que du point de vue de l'interface outils de coupe/matériau et pas du tout de l'interface tourillon/ maillon. Quant au tourillon, il est riveté sur le maillon extérieur, comme dans la quasi-totalité des chaînes que nous avons étudiées.

Une autre configuration très répandue pour les chaînes de sciage se trouve illustrée par le document DE 8530697 constitués d'une chaine alternée. On y lit que le maillon extérieur 6 maintient une distance fixe entre ses deux flasques latérales, par l'adjonction d'un dispositif annexe évitant le glissement axial. Chaque tourillon est traversé par une agrafe en forme de L qui, après mise en place est repliée pour prendre une forme de U. Ce montage, qui détruit la symétrie du tourillon, le rend solidaire en rotation du maillon extérieur.

Ce type de chaîne de sciage présente plusieurs inconvénients, dont le principal est qu'elle élude le problème posé par l'invention, à savoir le phénomène d'usure du tourillon. Étant solidaire d'un des maillons, il tourne d'un angle $\alpha$ dans l'alésage de l'autre maillon chaque fois que la chaine s'enroule d'un angle $\alpha$ sur une poulie ou effectue la rotation inverse. En effet, comme schématisé en figure 2, pour un incrément de rotation angulaire $\alpha$ de la poulie d'enroulement de la chaine (de rayon OQ), l'élément modulaire s'enroule d'un angle élémentaire $\alpha$ sur la poulie. L'isobarycentre de ce maillon passe de la position Q à la position Q', et l'axe du tourillon qui le précède passe de la position R à la position R'. Il en résulte une déflexion angulaire $\alpha$ du maillon mobile en rotation autour du tourillon. Lorsqu'on envisage le fonctionnement cinématique, le passage en un intervalle de temps dt entre la position (Q, R) et la position (Q', R') détermine une vitesse angulaire d$\alpha$/dt. Tout cela sous une forte tension, à vitesse relativement élevée de l'ordre de plusieurs m/s, voire plus élevée pour le bois, et avec des chocs (micro percussions) et vibrations.

Or cette configuration tend à localiser aux mêmes endroits les contraintes locales, de sorte que l'usure qui en découle est très localisée pour le maillon qui tourne vis à vis du tourillon. Ce tourillon et son alésage s'usent par ovalisation, puis déformation plastique des sections de métal les plus sollicitées en traction. Le frottement sous tension des tourillons rogne progressivement des particules solides sur les surfaces de friction. L'usure et la détérioration d'une chaîne intervient donc en priorité au niveau des surfaces de frottement entre le tourillon et chaque maillon, et plus particulièrement entre le tourillon et l'extrémité du maillon libre en rotation autour de ce tourillon. Du fait du blocage de la rotation du tourillon à un premier maillon, cette rotation $\alpha$ se trouve entièrement supportée par la surface de contact entre ce tourillon et le second maillon qui, lui, est libre en rotation autour du tourillon. La totalité du mouvement de rotation qui engendre l'usure se trouve reportée sur la ou les très faible(s) surface(e) de frottement entre le tourillon et l'un des deux maillons. Pire encore, comme nous le verrons en détail ultérieurement, le fait que tout le débattement angulaire soit concentré sur une seule liaison mécanique accroît non seulement l'usure proportionnelle au déplacement angulaire, mais aussi du fait de l'accroissement corrélatif de la vitesse angulaire, une usure liée à cette vitesse angulaire et qui augmente de manière non linéaire avec cette vitesse.

Enfin, lorsque le tourillon est lié en rotation avec un maillon, généralement extérieur, cela se fait généralement soit à force, soit par rivetage, ce qui rend plus complexe la maintenance en cas de maillon détérioré.

Seuls deux documents visent à réduire l'usure par l'interface tourillon/maillon.

Le premier d'entre eux est un quatrième document, la demande de brevet n° WO-A1-2008/041263 (Fantini). Il décrit une chaîne de sciage de pierres composée de maillons intérieurs alternant avec des maillons extérieurs supportant l'outil de sciage. Contrairement aux deux précédents, ce document vise, comme l'invention, à résoudre le problème posé par l'usure du tourillon lorsqu'il est lié au maillon extérieur.

Pourtant, contrairement à ce que laisse imaginer le titre, il ne propose pas de laisser le tourillon libre en rotation par rapport aux deux maillons connexes. Il propose seulement de changer le maillon sur lequel le tourillon sera fixé en rotation. Plus précisément, de localiser la liberté de rotation inhérente à une chaîne entre le maillon extérieur et le tourillon (de page 4 ligne 28 à page 5 ligne 5). Ceci par opposition à l'art antérieur qui place très majoritairement cette liberté de rotation entre le maillon central et le tourillon. Il va jusqu'à affirmer p.3 ligne 11, qu'une éventuelle rotation du tourillon dans son alésage ovaliserait cet alésage, enclenchant par là le mécanisme de rupture. Mais ce faisant, il concentre sur l'une seulement des liaisons tourillon/maillon chaque déplacement angulaire $\alpha$ qui est pourtant inhérent au fonctionnement d'une chaîne.

Un examen plus précis montre qu'il regroupe dans ce même document deux interprétation de la rupture d'une chaîne de sciage, et qu'à chacune de ces interprétation il associe un mode de réalisation fort différent, les deux modes étant regroupés en caractérisant l'invention par la liaison tourillon 12 / maillon extérieur 11, libre, et non par la liaison plus contrainte, entre le tourillon 12 et le maillon intérieur 1 puisque celle-ci diffère entre les deux modes de réalisation,

La première interprétation considère que la principale cause de rupture des tourillons consiste à les faire fléchir, lors de leur insertion entre deux maillons consécutifs, de manière à éviter que cette précontrainte les empêche de glisser hors de la chaîne lors du fonctionnement. Selon ce document, une telle pratique cause des frottements plus intenses à certains endroits, qui finissent par ovaliser les pièces alésées puis entraîner leur rupture. Il convient de remarquer que si cette évocation d'une ovalisation des alésages se retrouve comme pour l'invention, elle n'est envisagée que comme conséquence d'une cambrure des axes. Contrairement à la présente invention, cette partie du document considère que la cause essentielle d'usure réside dans cette cambrure des axes. Il vise à y remédier par un premier mode de réalisation schématisé fig. 15 de ce document. La figure montre une coupe où le profil des tourillons est cylindrique lors de la traversée de la première branche du maillon extérieur, puis conique lors de la traversée du maillon central, et enfin à nouveau cylindrique lors de la traversée de la seconde branche du maillon extérieur. L'idée consiste à compter sur la partie conique pour qu'elle réalise un coinçage du tourillon sur la maillon intérieur. Il y a donc solidarisation du tourillon avec l'un des maillons, l'originalité étant qu'il s'agit ici du maillon intérieur.

La seconde interprétation à la rupture des chaînes de sciage résulte de la solidarisation systématique du tourillon avec les pièces les plus extérieures, laissant la rotation se faire entre le tourillon et le maillon intérieur. La solution que préconise le document consiste alors à inverser cette situation et non à la supprimer comme dans l'invention. Il choisit de solidariser délibérément le tourillon avec le maillon extérieur, pour que la totalité du mouvement angulaire entre surfaces sous tension se trouve localisé dans les alésages portés par les bras du maillon extérieur, dans l'espoir de les lubrifier plus facilement que l'alésage du maillon intérieur. Le document insiste bien (p. 9, I. 26 à p. 10 I. 1) sur le fait que le tourillon (pivot) 12 est délibérément rendu solidaire en rotation du maillon intérieur 1. Ainsi ce document préjuge qu'une chaîne ne peut résister à l'usure si les tourillons ne sont pas solidarisés à l'un des maillons.

En réalité, il importe peu que le tourillon soit solidaire du maillon intérieur ou du maillon extérieur. Cela change très peu la situation car le véritable problème n'est pas le choix du maillon solidarisé avec le tourillon. Le véritable problème réside dans le fait que lorsque le tourillon est solidaire d'un quelconque des deux maillons, la surface de frottement entre ce tourillon et l'autre maillon concentre les contraintes sur une zone très petite. Plus précisément, à chaque fois que l'angle entre deux maillons consécutifs passe de sa position alignée (sous tension) à la courbure maximale que lui impose chaque pignon ou organe de courbure, et vice versa, ces contraintes résultent d'une part de la totalité du débattement angulaire $\alpha$ autour du tourillon et d'autre part, par voie de conséquence, de la vitesse de rotation angulaire $\omega = d\alpha/dt$ autour du tourillon. Ces contraintes, ainsi localisées, excèdent les capacités de résistance à l'usure pour les surfaces en contact. Il en résulte un début d'abrasion, qui progressivement tend à ovaliser l'une au moins des surfaces de contact. La matière enlevée amincit la pièce considérée, au point de générer une déformation plastique sous contrainte qui accroît fortement l'ovalisation. Et ainsi de suite, selon un phénomène rapidement divergent.

Bien souvent, avant même la rupture, la déformation par ovalisation de l'alésage allonge la période spatiale de la chaîne au point qu'elle ne correspond plus au pas des pignons ou autres organes mécaniques du parcours de la chaîne, et qu'elle dysfonctionne (perte de l'entrainement par exemple, ou sortie des moyens de guidage).

Seul le cinquième document FR 2 961 572 divulgue une chaîne modulaire de sciage qui vise à répartir à rendre le tourillon libre en rotation par rapport à la fois au maillon amont et au maillon aval. Il vise ainsi à répartir le déplacement élémentaire $\alpha$ et la vitesse angulaire qui en résulte d$\alpha$/dt entre deux interfaces :

- d'une part l'interface entre le tourillon et le maillon extérieur,
- d'autre part l'interface entre le tourillon et le maillon intérieur.

Ainsi l'usure est-elle répartie sur deux zones de frottement : l'une à l'interface entre le tourillon et le maillon extérieur, et l'autre à l'interface entre le tourillon et le maillon intérieur.

Toutefois, la réalisation pratique ne prend pas en compte tous les paramètres requis. Examinons plus précisément avec la Fig. 2 les mouvements en jeu pour un incrément de déplacement de la chaine lors de son enroulement sur une poulie. Le schéma est situé dans un plan formé par les déplacements d'un point quelconque de la chaîne au voisinage d'un pignon denté.

On y distingue :

- O le centre de rotation du pignon (qui n'est pas représenté pour plus de clarté) ;
- R l'extrémité distale du rayon que parcourent les axes des tourillons par rapport à l'axe O, pris au point d'inflexion du parcours de la chaîne ;
- R' l'extrémité distale du rayon que parcourent les axes des tourillons par rapport à l'axe O, pris sur l'axe avant dans le sens du mouvement du maillon venant juste de s'enrouler sur le pignon ;
- Q le point central de la corde formée par les points du plan traversés par les axes des tourillons amont et aval du maillon précédant juste le point d'inflexion de la chaîne ;
- Q' le point central de la corde formée par les points du plan traversés par les axes des tourillons amont et aval du maillon venant juste de s'enrouler sur le pignon, c'est-à-dire venant de décrire un angle $\alpha$ de centre O. Q et Q' correspondent à des positions de maillons telles que les plans perpendiculaires au mouvement de la chaîne et passant par Q et Q' se croisent en O. L'angle QOQ' qu'ils délimitent est appelé $\alpha$. On s'aperçoit alors que l'angle aigu formé par le prolongement de QR et par RQ' vaut alors aussi $\alpha$ puisque ses côtés sont chacun perpendiculaires à un côté de QOQ'. Ainsi, chaque fois que le pignon tourne d'un angle $\alpha$, le maillon qui s'enroule sur ce pignon tourne aussi d'un angle $\alpha$ par rapport à sa position initiale. En d'autres termes, la vitesse de rotation angulaire d'un maillon par rapport à sa position initiale, lorsqu'il attaque un pignon, est égale à la vitesse de rotation de ce pignon.

On voit que deux causes d'usure s'additionnent :

- d'une part les mouvements de rotation d'un maillon par rapport à un tourillon, sous forte traction, qui génèrent une usure proportionnelle au déplacement angulaire, et
- d'autre part la vitesse angulaire $\omega$ exprimée en rd/s, soit $\Omega = \omega / 2\pi$ exprimé en tr/s à laquelle ces rotations s'accomplissent et qui génèrent une usure proportionnelle au carré ou au cube de cette vitesse (suivant la valeur de ladite vitesse).

Vu du tourillon, l'angle élémentaire $\alpha$ se répartit entre :

- le mouvement angulaire $\alpha$, du maillon amont vis-à-vis du tourillon et
- le mouvement angulaire $\alpha_2$ du maillon aval vis-à-vis de ce même tourillon.

Selon l'art antérieur des documents 1 à 4, la solidarité du tourillon avec l'un des maillons s'exprimait :

- par $\alpha_1 = 0$ et $\alpha_2 = \alpha$ lorsque le tourillon est solidaire du maillon amont, et
- par $\alpha_1 = \alpha$ et $\alpha_2 = 0$ lorsque le tourillon est solidaire du maillon aval.

Selon le document 5 (FR 2 961 572), les effets des couples de frottement déséquilibrés s'expriment :

- lorsque le couple de frottement avec le maillon amont prédomine, la proportion $\alpha_1$ de l'angle $\alpha$ sera faible
- lorsque le couple de frottement avec le maillon aval prédomine, la proportion $\alpha_1$ de l'angle $\alpha$ sera forte

De la sorte, il y a un couple résultant qui est la différence des deux couples de frottement, et même en l'absence de liaison mécanique, ce couple résultant s'oppose à une liberté complète et effective du tourillon. En supprimant les liaisons mécaniques fixes entre tourillon et les deux extrémités, le document 5 a nettement amélioré la liberté de rotation du tourillon, mais n'est pas tout à fait parvenu à la rendre totale.

Avec les indications textuelles et graphiques relevées sur le document 5 , cette observation se confirme. En pratique, puisque la chaîne est soumise à une tension, les contraintes ne sont pas uniformément réparties tout autour du tourillon, mais concentrées sur le demi cylindre situé dans la direction de la force de traction. Si l'on raisonne sur une section en deux dimensions dans le plan de la chaine, l'approximation généralement acceptée considère que seul le demi alésage situé dans le sens de la traction est sollicité, et que sa surface est assimilable à un rectangle dont la longueur est celle du diamètre et la largeur celle de la zone de contact, d'où son nom d'approximation diamétrale. On raisonne alors sur une pression moyenne supposés uniformément répartie sur la surface de ce rectangle. La figure 3A schématise un tourillon cylindrique dont les zones de frottement centrale 1 et latérales 2 sont définies par $d_i$ pour le diamètre de la zone de contact avec le maillon interne, et $l_i$ sa hauteur selon l'axe de rotation, et $d_e$ pour le diamètre de la zone de contact avec le maillon externe, et $l_e$ la hauteur selon l'axe de rotation de chacun de ses bras, soit pour deux bras $2\, l_e$. La figure 3B schématise un tourillon ayant deux diamètres séparés par deux épaulements, un diamètre intérieur plus large $d_i$, et un diamètre extérieur plus petit $d_e$. Les zones de frottement centrale 1 et latérales 2 y sont définies de manière identique.

La surface de frottement tourillon/maillon intérieur est alors $d_i.l_i$ et la surface de frottement tourillon /maillon extérieur est alors $2\, d_e.l_e$ , proportionnelle au coefficient de frottement près à la pression de frottement.

Le réflexe de l'homme de métier consiste, comme nous l'avons vu, à se prémunir contre la casse de la chaîne en choisissant $l_i = 2\, l_e$.de manière à rendre égales les sections qui travaillent en extension. Si on avait $d_e = d_i$, l'égalité pourrait être assez simplement obtenue. Mais dès lors qu'il y a des diamètres $d_e$ et $d_i$, sensiblement différents, l'égalité des pressions de frottement devient de fait inatteignable. Le document 5 n'échappe pas à cela. Si l'on se réfère aux définitions liées à la figure 3, la pression de frottement du maillon extérieur sur le tourillon est, au coefficient de frottement près, $d_e.l_e$, Compte tenu de la perspective, $l_e$ équivaut sensiblement à 4 mm sur le schéma et $d_e$ vaut 4mm. Alors l'ensemble des deux surfaces de contact de ce maillon avec le tourillon sont sensiblement de $2\, d_e.l_e = 32mm^2$.

Ce même tourillon est en contact avec le maillon intérieur par une surface de frottement $d_i.l_i$ où $d_i$ vaut 12,5 mm et $l_i$ vaut 9,5 mm, soit pour la surface $d_i.l_i = 120\ mm^2$. Cette valeur représente, au coefficient de frottement près, la pression de frottement du maillon intérieur sur le tourillon. Bien évidement, les coefficients de frottement entre chaque maillon et le tourillon sont identiques dans la quasi-totalité des cas. On voit bien que, malgré l'objectif affiché de ce document, ce tourillon qui n'est rigidement lié à aucun des maillons ne présente pas pour autant une vraie liberté de rotation puisqu'il est soumis de la part des deux maillons à des couples inégaux en module et de sens opposés. Il est donc de fait entraîné par la résultante de ces deux couples. Cela induit une rotation qui réduit l'usure, mais cela ne suffit pas à faire qu'une rotation élémentaire $\alpha$ se répartisse en deux angles sensiblement égaux a/2 ; l'une entre le tourillon et le maillon intérieur, l'autre entre le tourillon et le maillon extérieur. Il en résulte une réduction significative des avantages attendus d'un tourillon libre en rotation.

La présente invention part du constat qu'un tel choix rend inégaux les couples de frottement, et donc entraîne le tourillon avec l'un des maillons, et ce de manière d'autant plus forte que le déséquilibre des couples est plus fort. L'objectif de décomposer un déplacement élémentaire $\alpha$ en deux déplacement élémentaires sensiblement égaux autour du tourillon $\alpha1 = k_1.\ \alpha$ et $\alpha_2 = k_2.\ \alpha$, avec $k_1.\ \# k_2$ n'est donc pas véritablement atteint par le document FR 2 961 572.

Ce déséquilibre est plus conséquent encore lorsqu'on considère les vitesses angulaires. Si la rotation du maillon d'un angle $\alpha$, est effectué en un intervalle de temps dt, sa vitesse angulaire est $\omega = d\alpha/dt$, exprimée en rd/s (ou $\Omega = \omega\ /2\pi$ exprimé en tr/s). Si l'on parvient à répartir le déplacement angulaire $\alpha$ en deux déplacements distincts $\alpha_1$ et $\alpha_2$ sensiblement égaux, donc chacun de valeur moitié, la vitesse angulaire est elle aussi divisée par deux. Or l'usure découlant de cette vitesse dépend de $\omega$ à la puissance 2 ou 3 suivant la gamme de valeur de $\omega$. Diviser $\alpha$ par deux signifie donc diviser l'usure due à la vitesse angulaire par 4 ou par 9.

L'objectif de la présente invention est donc d'égaliser de fait, et le plus possible, ces angles $\alpha_1$ du mouvement angulaire du maillon amont vis-à-vis du tourillon, et $\alpha_2$ du mouvement angulaire du maillon aval vis-à-vis de ce même tourillon. Ceci afin d'améliorer significativement les réductions d'usure rencontrées dans l'art antérieur, et de rendre cette amélioration d'autant plus grande que la vitesse de la chaîne est plus élevée.

Par ailleurs, le document FR 2 961 572 est limité aux chaînes de sciage alors que la présente invention concerne tous les types de chaînes constituées d'une succession de maillons et de tourillons sur lesquels ils s'articulent.

Une autre lacune de ce document réside dans la nécessité d'utiliser une alternance de maillons intérieurs et de maillons extérieurs, ce qui interdit aux autres types de chaînes de bénéficier d'une libre rotation des tourillons. Enfin, que la présence d'épaulements sur les tourillons soit impérative rend ces chaînes inaptes à certaines applications. Les chaînes de levages en sont un exemple non limitatif.

Enfin, un autre objectif de la présente invention consiste à rendre cette amélioration applicable des modes de réalisation dont les tourillons ne dépassent pas de l'encombrement des maillons, ce qui permet de l'appliquer aux chaînes dont l'encombrement est limité en largeur. Le document FR2055876 divulgue un élément modulaire de chaîne similaire.

**Exposé de l'invention :**

La présente invention telle que définit dans les revendications, consiste en un élément modulaire de chaîne 10 centré sur le tourillon plutôt que sur le corps d'un maillon, cet élément modulaire 10 étant apte à constituer une chaîne par assemblage itératif alterné, et comportant :

- un tourillon 13 constituant un axe de rotation à symétrie monté libre en rotation vis-à-vis de chacun des demi-maillons 11, 15 qui s'y articulent
- un demi-maillon intérieur 11 comportant une extrémité intérieure 12 s'articulant sur le dit tourillon et la moitié afférente du corps du dit maillon, délimité selon une section transversale à l'axe X du mouvement de la chaîne ; selon la Fig. 4, si le sens du mouvement est X comme sur la Fig. 1, ce demi-maillon intérieur est un demi maillon aval
- un demi-maillon extérieur 15 comportant une extrémité extérieure 14 s'articulant sur le dit tourillon et la moitié afférente du corps du dit maillon, délimité selon une section transversale à l'axe X du mouvement de la chaîne,

et **caractérisé** en ce que :

- les zones de frottement 1, 2 du tourillon 13, 23, 33 avec les surfaces coopérantes de chacun des demi-maillons qui s'y articulent sont dimensionnées pour rendre sensiblement égales les intégrales des pressions de frottement d'une part entre ledit tourillon et le demi maillon intérieur s'y articulant, et d'une part, et entre ledit tourillon et le demi maillon intérieur s'y articulant,
- il comporte des moyens annexes aptes à éviter le glissement axial des tourillons lors du fonctionnement.

Plus précisément, dans le cas très fréquent où les éventuelles zones de frottement radiales (dans des plans orthogonaux à l'axe), ont des pressions de frottement négligeables vis-à-vis de la pression de frottement due aux zones de frottement de forme cylindrique ou en secteur cylindrique, le calcul des pressions de frottement peut recourir à l'approximation diamétrale. Celle-ci conduit à écrire

$$k_i\, d_i.l_i = 2\, k_e\, d_e.l_e$$

où $k_i$ est le coefficient de frottement entre le tourillon et le demi-maillon intérieur, $k_e$ le coefficient de frottement entre le tourillon et le demi-maillon extérieur, $d_i$ le diamètre de la zone de contact du tourillon avec le demi-maillon intérieur, $l_i$ sa hauteur selon l'axe de rotation, $d_e$ le diamètre de la zone de contact du tourillon avec le maillon extérieur, et $l_e$ la hauteur selon l'axe de rotation de chacun de ses bras.

Et lorsqu'on choisit un même matériau pour les deux demi-maillons s'articulant sur un même tourillon, on a $k_i = k_e$, d'où :

$$d_i.l_i = 2\, d_e.l_e$$

Les moyens permettant d'éviter le glissement axial des tourillons peuvent consister en l'un des dispositifs ci-dessous, cités de manière non limitative :

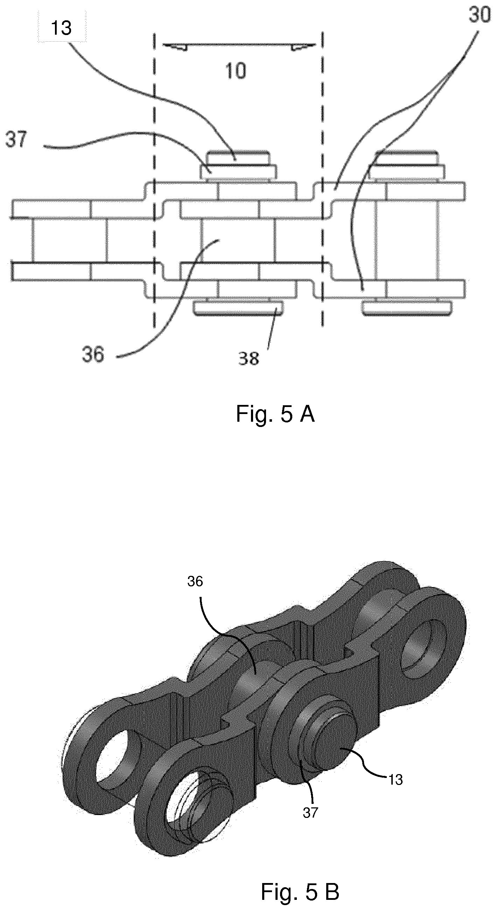

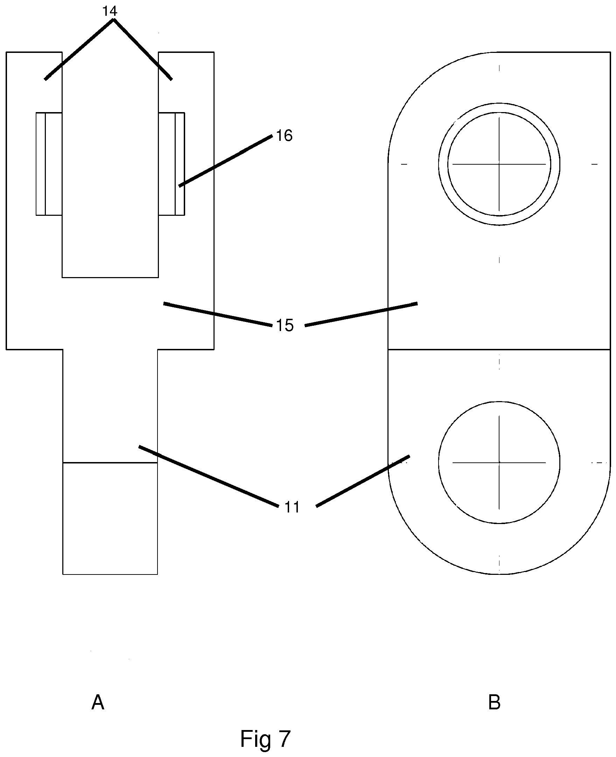

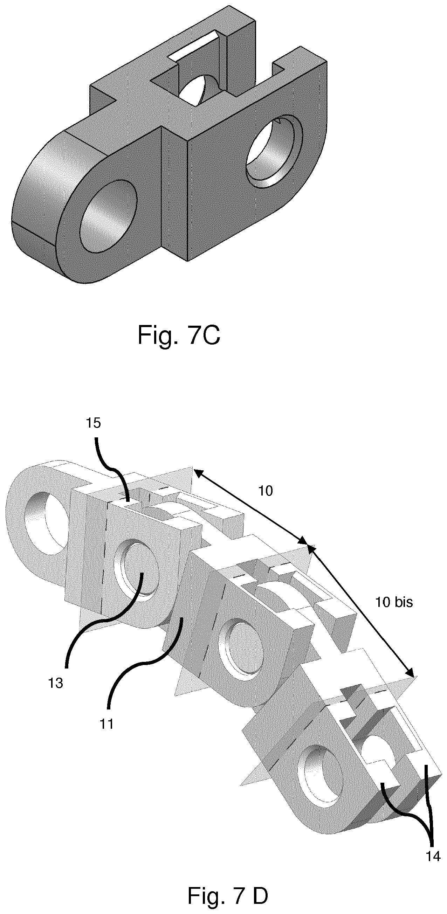

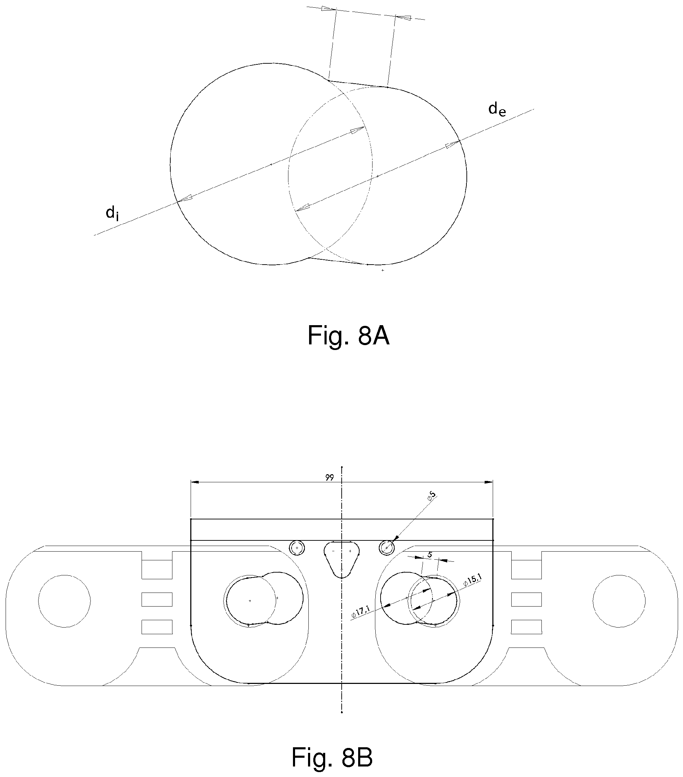

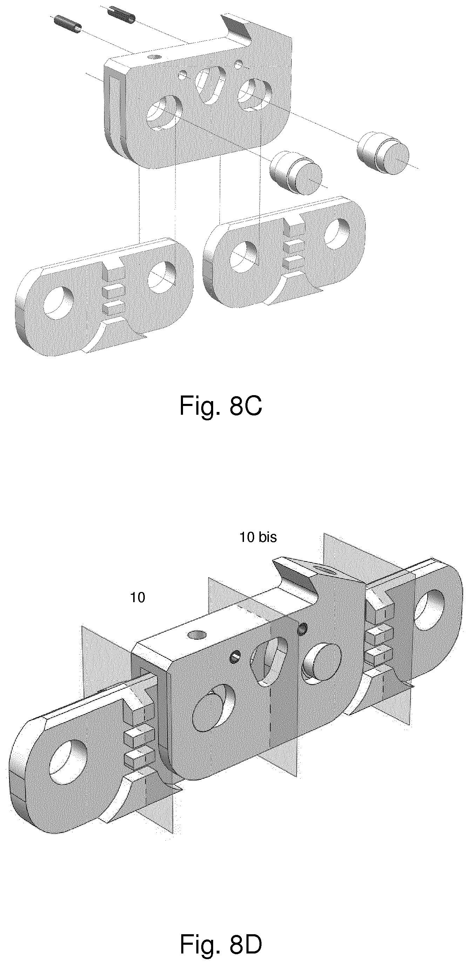

- au moins une paire d'épaulement de l'axe du tourillon formant transition entre deux diamètres différents
- un épaississement franc d'une extrémité du tourillon, et l'adjonction à l'autre extrémité d'une vis ou d'un circlips ou tout autre moyen, pourvue qu'il n'exerce pas une contrainte axiale de compression (cf. Fig. 5). Si l'on recourt à une vis, celle-ci aura une course limitée qui ne permet pas d'exercer de compression axiale sur l'extrémité extérieure du maillon qu'elle traverse
- un encagement de l'axe dans le maillon extérieur, dans lequel un tourillon cylindrique est entré à force ou par encliquetage (cf. Fig. 7)
- un encagement par une pièce extérieure formant cavalier, montée après introduction du tourillon
- un encagement par une lumière d'introduction du tourillon à deux positions, la première étant une position d'introduction à travers un alésage d'un diamètre égal au diamètre le plus gros du tourillon augmenté d'un jeu fonctionnel permettant un coulissement aisé, et la seconde position, fonctionnelle vers la position de travail du tourillon dans un alésage par une lumière se terminant par un alésage d'un diamètre égal au diamètre le plus petit du tourillon, augmenté d'un jeu fonctionnel permettant la rotation libre. Cette variante sera détaillée dans la Fig. 8.

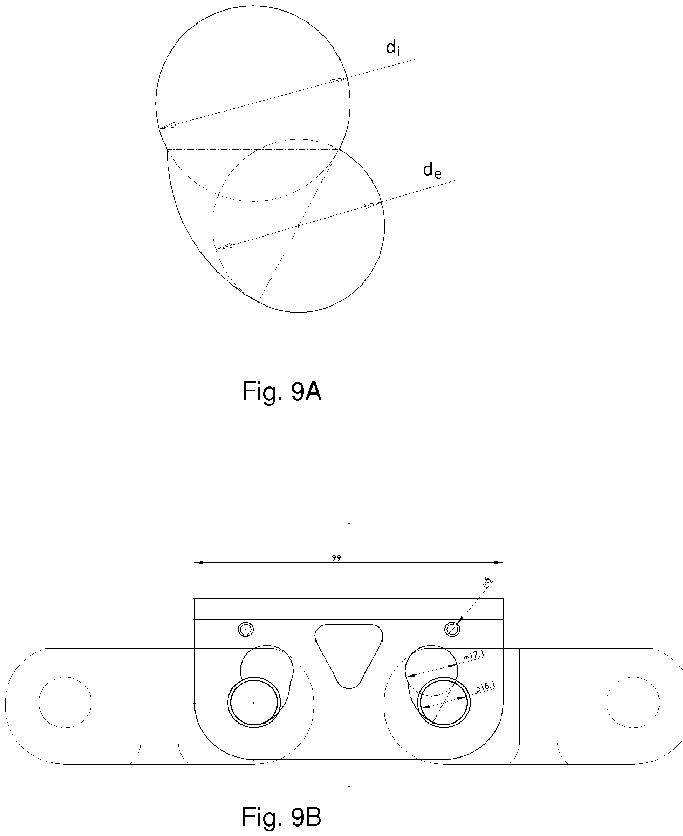

Selon un mode de réalisation particulier, deux éléments modulaires de chaine selon l'invention ayant chacun leur tourillon orthogonal à l'autre peuvent être concaténés longitudinalement pour obtenir un élément modulaire double, apte à se courber selon deux directions orthogonales comme montré sur la Fig. 9.

**Description des figures :**

- la figure 1 schématise les trois parties d'un maillon, selon leur topologie : extrémité extérieure (a), extrémité intérieure (b) et corps (c)
- la figure 2 représente l'angle décrit par un maillon au passage sur un pignon
- la figure 3 schématise un tourillon les zones de frottement sont délimitées par deux épaulements, soit pour un tourillon cylindrique (fig. 3A), soit pour un tourillon avec deux diamètres et deux épaulements (fig. 3B)

- la figure 4 qui définit et délimite les diverses parties de l'élément modulaire 10 selon l'invention, a l'aide de l'exemple non limitatif d'un maillon mixte
- la figure 5 concerne le selon le premier mode de réalisation de l'invention. En 5A on représente deux maillons mixtes d'une chaîne de transfert, où est délimité un élément 10 selon l'invention, le tourillon étant limité en déplacement axial par un épaississement franc d'une extrémité du tourillon, et l'adjonction à l'autre extrémité un anneau élastique de type circlips. En 5B on représente en 3 dimensions de deux maillons de la même chaîne, pour aider le lecteur à visualiser l'assemblage de la figure 5A.
- la figure 6 représente une seconde réalisation préférentielle de l'invention permettant par montage itératif alterné de constituer une chaîne de coupe introduisant un jeu supplémentaire grâce à un maillon extérieur en plusieurs pièces mécaniques reliées par un cavalier 22 doté d'un jeu par rapport aux flasques 10 sur lesquelles s'articulent les tourillons. La Fig. 6A montre un éclaté des pièces pour comprendre leur agencement, la Fig. 6B délimite en grisé l'élément modulaire selon l'invention et la Fig. 6C montre un assemblage fonctionnel de plusieurs éléments
- la figure 7 représente un élément modulaire selon une troisième réalisation préférentielle de l'invention, permettant de réaliser une chaîne de transfert à maillons mixtes. En 7A et 7B on voit un maillon mixte en vue de profil et de face. En 7C on voit l'un des maillons en tant que pièce physique. En 7D on voit un morceau de chaîne de transfert réalisé par montage itératif d'éléments modulaires selon ce troisième mode de réalisation, où des plans virtuels délimitent deux de ces éléments modulaires 10, 10bis selon l'invention.
- les figures 8 et 9 schématisent le quatrième mode où l'encagement du tourillon se fait à l'aide d'une lumière à deux diamètres :

  - dans les figures 8, les deux alésages sont dans un même axe, montré en 8A. Cette configuration conduit à une première réalisation dont les pièces sont montrées en 8B et 8C, et sur leur assemblage 8D on délimite deux éléments modulaires 10, 11 selon l'invention.
  - dans les figures 9, les deux alésages sont désaxés, et l'orifice résultant 9A a une forme de haricot ; il permet de définir le maillon externe 9B dont la mise en oeuvre est analogue à celle de la figure 8

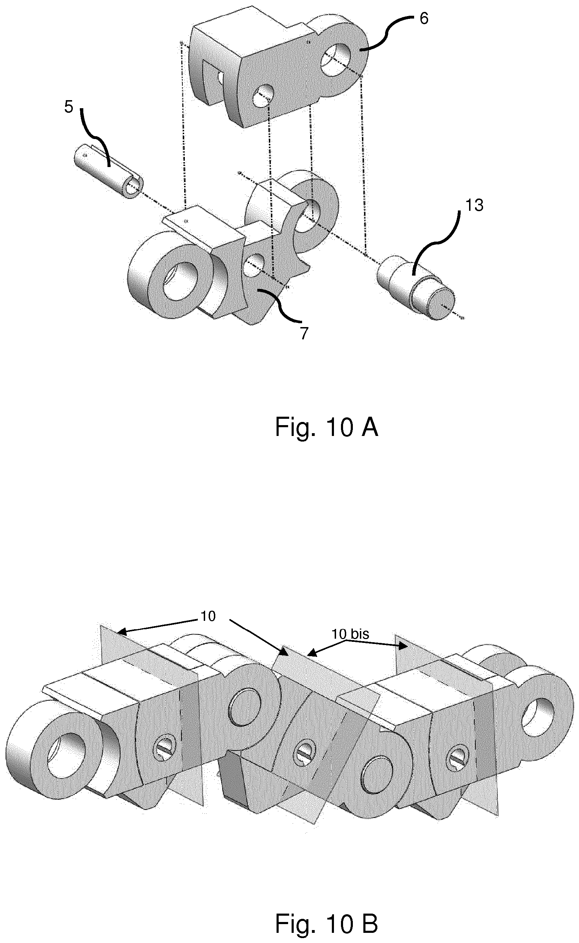

- la figure 10 montre le maillon externe en deux parties mis en oeuvre dans le cinquième mode de réalisation de l'invention

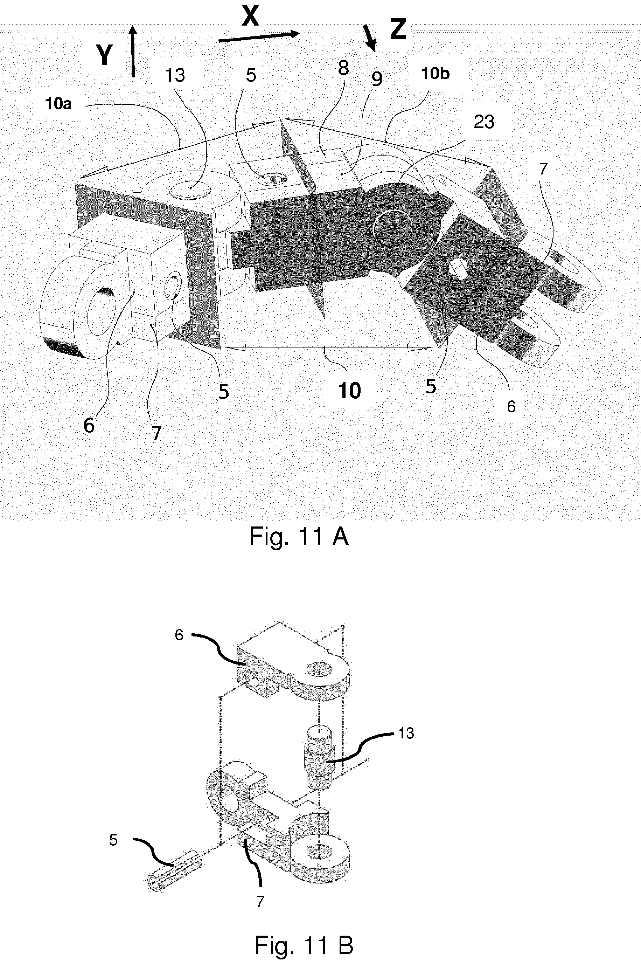

- la figure 11 représente le sixième mode de réalisation constitué d'un double élément modulaire concaténé, l'ensemble étant apte à se plier selon deux directions successives orthogonales.

**Description de modes particuliers de réalisation :**

Un **premier mode** de réalisation concerne une chaîne mixte représentée sur les figures 5A et 5B. La Fig. 5 B montre des maillons mixtes identiques comportant deux flasques planes alésées et cintrées en opposition, maintenues à distance avec une bague entretoise glissée autour de chaque tourillon. La Fig. 5A délimite une élément modulaire 10 selon la revendication 1, dont les maillons intérieur et extérieur sont tous deux constitués de deux flasques planes alésées et cintrées en opposition, maintenues à distance avec une bague entretoise glissée autour de chaque tourillon, caractérisé en ce que :

- les zones de frottement du tourillon 33 avec les surfaces coopérantes de chacun des demi-maillons qui s'y articulent ont même diamètre et même largeur et sont faites d'un même matériau, ce qui égalise exactement les couples de frottement,
- les moyens annexes aptes à éviter le glissement axial des tourillons lors du fonctionnement sont constitués, dans les parties du tourillon qui dépassent du maillon extérieur, par un matage à une extrémité et à l'autre extrémité l'ajout d'une pièce mécanique de blocage, comme par exemple un circlips

Plus précisément, les maillons mixtes sont construits autour de deux flasques 30 cintrées de manière antagonistes. Leur maintien rigide et à distance est assuré par une bague entretoise 36 enfilée sur un tourillon 33. Dans sa partie située entre les maillons, ce tourillon a une forme cylindrique comme sur la figure 3B. Dans sa partie située à l'extérieur des maillons sont placés les moyens aptes à éviter le glissement axial. L'une des extrémités du tourillon est matée de manière à créer un franc élargissement 38 du diamètre, constituant une tête, et l'autre extrémité est munie d'un autre moyen de blocage à l'aide d'une pièce de blocage ajoutée 37 n'exerçant aucune pression axiale, à savoir un circlips. Mais on ne sortirait pas de l'invention en le remplaçant par une goupille précédée d'une rondelle, une vis limitée dans sa course pour ne pouvoir exercer de pression axiale ou tout autre un moyen équivalent.

Si la bague entretoise empêche le rapprochement, le tourillon monté avec jeu autorise un très léger débattement dans le sens de l'écartement des deux flasques coudées, ce qui confirme le caractère négligeable des pressions de frottement radiales (sur une surface en forme de portion de disque). De plus, ces pièces sont réalisées dans le même matériau qui présente le même coefficient de frottement vis-à-vis du matériau du tourillon, de sorte que $k_i = k_e$

$$k_i\, d_i.l_i = 2\, k_e\, d_e.l_e$$

$$k_i\, d_i.l_i = 2\, k_e\, d_e.l_e$$

Ainsi la mise en oeuvre de l'invention se ramène principalement au respect de l'égalité :

$$d_i.l_i = 2\, d_e.l_e$$

où $d_i$ est le diamètre de la zone de contact avec le maillon interne, li sa hauteur selon l'axe de rotation, $d_e$ le diamètre de la zone de contact avec le maillon externe, et $l_e$ la hauteur selon l'axe de rotation de chacun de ses bras.

Puisqu'ici le tourillon n'a qu'un seul diamètre, $d_i = d_e$. Et comme les maillons ont aussi même épaisseur $l_i = 2\, l_e$. L'égalité est réalisée de fait dès lors que l'on utilise les mêmes matériaux en contact avec le tourillon pour avoir les mêmes coefficients de frottement. Sans même écrire l'équation ci-dessus des pressions de frottement, il appert que les couples de frottement résultent uniquement du contact de de quatre surfaces en secteur cylindrique, égales et de même caractéristiques de friction, sur un seul et même tourillon. Cela entraîne l'égalité des couples de frottement, sans effort de conception et avec une très bonne précision.

Un **second mode** de réalisation concerne l'adaptation de la présente invention à la chaîne alternée de sciage décrite par ses éléments dans le document 5. L'analyse de ce document 5 (FR 2 961 572), et l'expérience de l'homme du métier ayant montré que le gain en usure est certes important, mais encore assez éloigné de l'optimum. Des caractéristiques complémentaires sont requises pour se conformer à la présente invention.

La figure 6 montre une chaîne de coupe semblable à celle évoquée dans le document 5, mais satisfaisant en outre aux conditions de la présente invention. Pour une meilleure représentation par le lecteur, elle est représentée en perspective Fig. 6C, et détaillée sur les figures 6A et 6B.

Le commentaire des diverses pièces est effectué uniquement dur la figure A éclatée, dont les vues B et C découlent immédiatement et avec évidence.

Il s'agit d'un élément modulaire de chaîne plus large que ce dernier. En revanche les divers éléments sont mieux exposés sur l'éclaté de la figure 6A, selon les pièces mécaniques constituant les maillons. Elle représente :

- un premier maillon intérieur 21a, amont dans le sens X du déplacement de la chaîne (à droite sur la figure),
- un maillon extérieur 20, 22,24, 25 constitué de plusieurs pièces : deux flasques 20, un porte outil de coupe 22 en forme de cavalier, un outil de coupe 24, une goupille élastique 25
- un second maillon intérieur 21b, aval

- les deux tourillons 23 afférents.

La figure 6B reprend la figure A mais en n'indiquant que l'élément modulaire selon l'invention, indiqué en grisé. Il n'est donc pas nécessaire s'y reporter les repères de désignation des composants, pas plus que dans la figure 6C qui, elle aussi, découle de CA de manière évidente.

Sur la figure 6B, on voit que cet élément modulaire selon l'invention comporte :

- un demi-maillon intérieur 21a,
- un premier élément modulaire selon l'invention, mis en évidence par la figure 6B, qui s'étend de la moitié de la pièce 21a, selon le plan de symétrie normal au sens de déplacement de la chaîne, qui comporte un premier tourillon 23 et la moitié des pièces constituant le maillon extérieur (deux flasques 20, un porteoutil 22 formant cavalier et portant l'outil de coupe 24, une goupille élastique 25), et qui s'arrête au plan de symétrie parallèle au précédent et commun aux flasques 20.
- un second élément modulaire selon l'invention commençant à ce même plan de symétrie commun aux flasques 20, et comportant l'autre moitié des pièces constituant le maillon extérieur, le second tourillon (le plus à gauche sur la figure) et la moitié amont du maillon intérieur aval 21b.
- la seconde moitié du maillon intérieur aval 21b.

Il importe de souligner qu'ici le cavalier porte outil 22 est monté avec un jeu par rapport à chacune des flasques 20 sur lesquels s'articulent les tourillons 23. Ces tourillons sont du type à épaulements comme figure 3 A. Le matériau de ces flasques ainsi que celui des maillons intérieurs 21 est choisi dans un matériau dur et apte au frottement. On peut citer comme exemple non limitatif des aciers très durs comme le creuzabro ou l'abramax.

Selon ce mode de réalisation, l'élément modulaire de chaîne 10 est caractérisé en ce que :

- les moyens aptes à éviter le glissement axial des tourillons sont constitués par un diamètre central $d_i$ du tourillon plus grand que le diamètre $d_e$ aux extrémités ($d_i > d_e$), cet élargissement central étant délimité par deux épaulements 3,
- le demi-maillon extérieur a un corps constitué de flasques 20 maintenues en position avec jeu par une pièce formant cavalier, ce jeu étant en position et en torsion dans le plan perpendiculaire à l'axe de la chaîne

Puisque le tourillon est à épaulements et double diamètre, on peut décrire les zones de frottement en se référant à la figure 3B. Le long du tourillon, les deux parties distales 2 servant de zone de frottement s'étendent chacune selon une hauteur axiales $l_e$ et présentent un diamètre $d_e$ qui coopère avec les alésages des flasques 20. Chaque tourillon est donc soumis sur ses extrémités à un couple de frottement de la part des deux surfaces de frottement cylindriques 2, coopérant avec les deux bras de l'extrémité extérieure du maillon. Mais en outre, le tourillon présente de petites surfaces radiales 3, qui induisent également un couple de frottement qui doit être ajouté. L'ensemble des surfaces 2 et 3 contribuent à induire un couple de frottement avec le maillon extérieur. La zone de frottement centrale 1 coopère avec le demi-maillon central de hauteur $l_i$ et de diamètre $d_i$.

Selon les dimensions données par ce document, et en supposant que toutes les surfaces de frottement mettent en présence les mêmes matériaux avec les mêmes états de surface, le calcul des couples de frottement revient à un calcul géométrique. Il est avantageux que le diamètre intérieur n'excède pas de plus de 15% le diamètre extérieur. Alors il est plus aisé de vérifier l'équation à laquelle conduit l'approximation diamétrale : $d_i.l_i = 2\,d_e.l_e$ , où $d_i$ est le diamètre de la zone de contact avec le maillon interne, $l_i$ sa hauteur selon l'axe de rotation, $d_e$ le diamètre de la zone de contact avec le maillon externe, et $l_e$ la hauteur selon l'axe de rotation de chacun de ses bras.

Ainsi les intégrales des pressions de frottement du tourillon vis-à-vis de chacun des demi-maillons seront plus aisées à égaler tout en maintenant des résistances à l'arrachement des sections situées de part et d'autre des alésages dans un plan orthogonal à la direction X de déplacement de la chaîne. Si alors les résistances mécaniques des pièces montrent un point faible, il convient de le corriger en agissant sur une dimension autre que celles impliquées dans la relation qui précède.

De façon avantageuse, le corps de chaque élément modulaire de chaîne selon l'invention est constitué de plusieurs pièces assemblées mais non soudées, ce qui ajoute un jeu supplémentaire en torsion selon l'axe du mouvement,. En effet, le jeu de fonctionnement entre le tourillon et chacun des demi-maillons qui s'y articulent confèrent à cette chaîne un jeu en torsion qui ne se retrouve pas dans les chaines où le tourillon est solidarisé rigidement à l'un des maillons. Il a été constaté qu'un tel jeu, se combinant aux forces de contact développées lors du sciage, laissait se déployer un couple auto directeur qui tend à maintenir la lame de coupe dans le plan où la coupe a été initiée. La constitution de maillons en éléments non soudés entre eux (à l'exception de l'outil 24 sur le porte-outil 22) amplifie cette aptitude et conduit à une coupe bien droite sans dérapage latéral.

De ce point de vue, les inventeurs ont eu la surprise de constater que cette compliance entre l'outil de coupe et la chaîne tend naturellement à créer un couple autodirecteur aidant naturellement à effectuer des coupes droites sans action correctrice. Il semble que l'interface outil de coupe/matériau à entailler tende naturellement à minimiser les contraintes. Ceci se traduit par l'apparition d'un couple autodirecteur ou auto orientant, d'amplitude non négligeable et qui tend à placer le plan de symétrie de l'outil (perpendiculaire au fil du tranchant) orthogonal à la surface à entailler. En d'autres termes, le plan dans lequel le porte outil trace son sillon dans le matériau à entailler est naturellement normal à la surface à entailler. Cela résulte de la succession des jeux en torsion qui découplent chaque porte outil des petits incréments de couple de torsion déstabilisant que la chaîne induit. Grâce à ces jeux en cascade qui s'additionnent le couple auto orientant de l'outil suffit à le maintenir dans une direction constante et normale à la surface à entailler. Ainsi on peut dire qu'une chaîne de coupe selon ce second mode de réalisation génère naturellement, et sans effort d'orientation, des sillons de coupe droits et normaux à la surface d'attaque du matériau à entailler. Ainsi, il est avantageux qu'il existe une chaine de jeux entre l'outil de coupe et les composants déterminant l'axe de coupe de la chaîne, qui ajoute un jeu supplémentaire en torsion selon l'axe du mouvement. Ceci permet l'expression du couple autodirecteur qui tend à générer des coupes droites sans action correctrice.

Dans l'art antérieur, la rigidité en torsion de la chaîne ne permet pas d'exploiter ce couple d'auto-positionnement, et c'est au contraire le plan de la lame de coupe entraînant la chaîne qui impose son orientation instable à l'outil de coupe. Il en résulte une grande difficulté à maitriser le tracé du sillon de coupe, à laquelle les dispositifs de l'art antérieur répondent par une augmentation de la tension de la chaîne, dans l'espoir de mieux maitriser l'orientation de l'outil de coupe. L'expérience montre que cela fatigue considérablement la chaîne et la mécanique d'entrainement. La tension est en effet couramment très élevée devant la force d'entrainement requise pour entailler le matériau à couper.

A l'inverse, la chaîne selon ce second mode de réalisation peut avantageusement être montée très peu tendue, avec une force de tension inférieure à la force requise pour les efforts de coupe. Et même de préférence nettement inférieure. A titre indicatif, selon l'art antérieur une lame de coupe dont l'axe est placé horizontalement, avec son plan de coupe vertical ne montre aucun affaissement de la chaine sous l'effet de son poids (courbe de chaînette tellement aplatie que la flèche n'est guère mesurable). A l'inverse, une chaîne selon ce second mode de réalisation est avantageusement très peu tendue au point que, placée dans la position définie à la phrase précédente, sa flèche au centre de la portée est de l'ordre d'un cm pour une lame d'un mètre de long.

Avec cette tension très faible, à l'opposé de l'usage habituel pour les chaînes de coupe, la force de tension de la chaîne de coupe selon ce deuxième mode de réalisation de l'invention est significativement inférieure à la force moyenne requise pour la coupe. Le sillon obtenu est naturellement parfaitement plan, sans qu'il soit nécessaire d'exercer des couples de contrôle du plan de coupe. Outre la répartition des angles de frottement déjà évoquée, cette faible tension augmente très significativement encore la durée de vie de la chaîne avant rupture.

Dans le cas où les éléments de chaîne selon l'invention sont destinés à constituer une chaîne de sciage, il suffit de doter certains au moins de ces maillons d'un outil de coupe sur leur corps. La souplesse en torsion selon l'axe du mouvement est alors extrêmement avantageuse. En effet, la plupart des outils de coupe se positionnent dans le matériau à couper de manière à minimiser les efforts de coupe. L'expérience montre que pour la grande majorité des outils de coupe, ce positionnement correspond au positionnement nominal, de sorte que la lames pourvue d'un telle chaîne effectue des coupes droites, dans le plan de la lame, sans qu'il soit nécessaire d'exercer le contrôle et les actions correctrices requis par toutes les autres chaînes de sciage.

L'invention concerne donc aussi une chaîne de coupe constituée par l'assemblage itératif d'un grand nombre d'éléments modulaires tels que décrits ci-dessus, cette chaîne étant appliqué à la coupe, et caractérisée en ce que l'outil de coupe possède une liberté en torsion qui lui permet de laisser l'outil de coupe se positionner selon ses interactions avec le matériau qu'il coupe

De façon avantageuse, le corps de chaque élément modulaire 10 de chaîne selon l'invention est constitué de plusieurs pièces ajoutant un jeu supplémentaire en torsion selon l'axe du mouvement, de manière à amplifier encore la tendance à effectuer des coupes droites sans action correctrice.

Un **troisième mode** de réalisation concerne une chaine mixte représentée figure 7, et pouvant servir à la transmission de mouvement. Les figures 7A et 7B montrent de dessus et de face un exemple de réalisation d'éléments modulaires 10, 10bis conformes à l'invention et tous semblables puisque les maillons sont mixtes. On y voit une moitié extérieure 15, une moitié intérieure 11 et un chanfrein 16 permettant l'introduction à force du tourillon : lors de cette introduction, les deux bras du maillon extérieur subissent un écartement élastique avant de reprendre leur position une fois le tourillon encagé. La figure 7C montre sa vue en 3D. A partir de ces pièces mécaniques, on obtient un module élémentaire selon ce troisième mode de réalisation en assemblant deux de ces maillons à l'aide d'un tourillon et en ne considérant que ce tourillon et le demi-maillon situé de part et d'autre. Cet élément est mis en évidence sur la figure 7D. Deux successifs de ces éléments modulaires 10, 10 bis sont délimités par des plans sur cette figure 7D. Le premier de ces éléments modulaire selon l'invention 10 comporte une moitié extérieure 15 d'un premier maillon, un premier tourillon 13 représenté figure 7D, et une moitié intérieure 11 d'un second maillon.

L'assemblage de deux maillons successifs est ici assuré par un tourillon 13 parfaitement cylindrique, et de longueur très légèrement supérieure à celle disponible pour son insertion. Il y est entré à force, cette force produisant une déformation élastique du maillon jusqu'à ce qu'il atteigne son emplacement de destination : il s'agit d'un encliquetage qui encage ce tourillon dans sa position de travail, et qui bloque tout déplacement axial sans pour autant exercer un couple de frottement significatif sur des surfaces radiales. En d'autres termes, l'élément modulaire de chaîne selon l'invention est caractérisé en ce que les moyens aptes à éviter le glissement axial des tourillons sont constitués par l'encagement du tourillon dans le demi-maillon extérieur

L'élasticité des branches de l'extrémité extérieure est ici mise à profit. Cette même élasticité rend le montage réversible avec action d'un opérateur. Ces maillons sont avantageusement moulés. Bien qu'ils puissent être métalliques, ils semblent plus simples à mettre en oeuvre dans une matière plastique comme par exemple l'ABS, le nylon ou tout autre matériau pour applications mécaniques qui est doté d'élasticité.

Là encore, les couples de frottement sont uniquement ceux résultants de quatre surfaces de frottement cylindriques qu'il est aisé de choisir égales et de même caractéristiques de friction. L'égalité des couples de frottement est donc aisé à obtenir avec une bionne précision à l'aide de ce mode de réalisation.

L'invention concerne aussi toute chaîne constituée par l'assemblage itératif d'un grand nombre d'éléments modulaires décrits ci-dessus.

Selon un **quatrième mode** de réalisation, illustré par les figures 8 et 9, puis 10, l'encagement du tourillon se fait à l'aide d'une lumière à deux diamètres.

Dans les figures 8, les deux alésages sont dans un même axe, montré en 8A. Cette configuration conduit à une première réalisation dont les pièces sont montrées en 8B et 8C. Elle correspond bien au cas d'une chaîne habituellement tendue lors de son fonctionnement.

L'encagement est obtenu par une séquence du montage, et non plus comme précédemment sur l'élasticité des pièces. Dans un premier temps, on place le maillon intérieur de manière à ce que son alésage ait même axe que le plus gros alésage (noté par simplification $d_i$ sur les figures, il correspond en fait au diamètre $d_i$ le plus gros du tourillon, augmenté d'un jeu fonctionnel) ce qui permet d'introduire le tourillon jusqu'à la profondeur souhaitée. Une fois cela fait, on fait coulisser le maillon intérieur de manière à ce que l'axe de son alésage soit confondu avec l'axe du plus petit alésage (noté par simplification $d_e$ sur les figures, il correspond en fait au diamètre $d_e$ le plus petit du tourillon, augmenté d'un jeu fonctionnel) du maillon extérieur, qui correspond à la position de travail. Puis on maintient dans cette position chaque tourillon à l'aide d'une goupille interdisant le retour en face du gros alésage. Cette goupille n'a en réalité pas d'autre action que dans des cas où la chaine serait détendue. Lorsqu'elle est tendue, l'entourage du petit alésage du maillon extérieur est en effet conçu pour entourer le plus possible le tourillon, de sorte que le goupillon n'exerce aucun couple de frottement en fonctionnement nominal.

La première position du tourillon lors de l'introduction doit permettre un glissement aisé au montage. Le plus gros alésage noté par simplification $d_i$ a donc typiquement un diamètre égal au diamètre le plus gros

diamètre $d_i$ du tourillon $d_i$ augmenté d'un jeu fonctionnel permettant un coulissement aisé. La seconde position, fonctionnelle, correspond au plus petit alésage dont le diamètre est typiquement égal au diamètre le plus petit du tourillon $d_e$, augmenté d'un jeu fonctionnel permettant la rotation libre.

Sur l'assemblage de plusieurs éléments, la figure 8D délimite deux éléments modulaires 10, 10 bis selon l'invention.

Dans les figures 9, les deux alésages sont désaxés, et l'orifice résultant 9A a une forme de haricot. Cette configuration correspond plutôt à des applications ou la tension de la chaine est faible ou par à coups. Elle conduit à une seconde réalisation dont les pièces sont montrées en 9B.

Selon un **cinquième mode** de réalisation, on décompose le demi-maillon extérieur en deux éléments aptes à tourner autour du tourillon. C'est ce qui permet le montage et l'encagement du tourillon 13. L'élément mécanique de base est représenté Fig. 10 A, ainsi que la goupille autour de laquelle les deux pièces tournent. Une fois ces deux éléments en place, on les immobilise en rotation à l'aide d'une goupille. On obtient ainsi un élément selon l'invention dont :

- le tourillon possède deux épaulements symétriques qui définissent un gros diamètre en son centre et un même plus petit diamètre à ses deux extrémités, et
- les moyens annexes aptes à éviter le glissement axial des tourillons lors du fonctionnement sont constitués par l'encagement du tourillon entre deux parties dissymétriques et coopérantes du maillon extérieur, aptes à tourner autour du petit axe du tourillon et à être bloqués dans cette rotation par une goupille transversale, d'axe parallèle à celui du tourillon

La Fig. 10 B montre un morceau de chaîne constitué à partir de l'assemblage de plusieurs éléments montrés en 10A, les éléments modulaires selon l'invention étant désignés par 10 et 11.

Selon un **sixième mode** de réalisation, illustré par la Fig. 11, deux éléments modulaires successifs 10a, 10b selon l'invention sont disposés de manière à ce que le second 10b soit tourné selon l'axe X d'un quart de tour, de manière à ce que son tourillon 23 soit orthogonal au tourillon 13 du premier élément modulaire 10a. On rappelle que l'axe local X de la chaîne peut être assimilé à l'axe de l'un des maillons, et que si l'on considère deux éléments modulaires successifs 10a, 10b comme c'est ici le cas dans ce sixième mode, l'axe X se trouve parallèle à l'axe longitudinal du maillon commun aux deux éléments connexes, qui est formé par les éléments 8 et 9 de la figure 11A.

On peut ainsi définir l'invention selon ce mode par l'assemblage 10 d'un premier élément modulaire 10a conforme à la revendication 1, et à sa suite d'un second élément modulaire 10b conforme à la revendication 1, orientés en référence à la direction X du maillon commun à ces deux éléments modulaires, lesdits deux éléments modulaires étant caractérisés en ce que :

- le premier élément modulaire 10a a un tourillon 13 d'axe Y orthogonal à X
- le second élément modulaire 10b a un tourillon 23 d'axe Z orthogonal à X et à Y.

Et l'itération alternée se poursuit jusqu'à obtention d'une chaîne.

La chaine composée à l'aide du module selon l'invention est alors constituée d'une succession itérative alternée des éléments ci-dessus conformes à la revendication 1. A savoir un élément du type 10a dont le tourillon 13 a un axe orienté selon Y, puis un élément du type 10b dont le tourillon 23 a un axe Z orthogonal à X et à Y, puis à nouveau un élément du type 10a dont le tourillon a un axe orienté selon Y, et ainsi de suite selon cet assemblage itératif alterné.

On peut donc définir l'invention selon ce mode comme l'alternance d'un élément modulaire 10a selon la revendication 1, dont le tourillon 13 est selon un axe Y, et d'un autre élément modulaire 10b selon l'invention tourné d'un quart de tour selon l'axe X, de manière à ce que son tourillon 23 soit orienté selon un axe Z orthogonal à X et Y.

On peut aussi définir l'invention selon ce mode comme un double élément modulaire 10a, 10b comportant une séquence alternée de deux éléments modulaires 10a et 10b selon la revendication 1 dont les tourillons ont alternativement, par rapport à l'axe local de la chaîne X, des directions Y et Z orthogonales entre elles et orthogonales à X. La chaîne étant alors formée de l'association itérative d'un grand nombre de ces doubles éléments alternés.

Un premier élément modulaire selon l'invention est montré par le repère 10 de la Fig. 11 A. Comme schématisé sur la Fig. 11B, il est constitué à partir d'un élément de base 7 comportant une extrémité de maillon intérieur, la moitié du corps du maillon et la moitié d'une extrémité de maillon extérieur, et constitué aussi d'un élément complémentaire 6 comportant l'autre moitié du corps et l'autre moitié de l'extrémité extérieure, cet élément 6 coopérant avec l'élément 7 de manière à constituer un maillon solidarisé par une goupille 5 qui traverse les éléments 6 et 7 alésés à cet effet.

Le montage s'effectue par exemple à partir de l'élément 7 que l'on positionne avec son maillon intérieur vertical et son semi maillon extérieur en contact avec le support de montage. On y positionne un tourillon vertical 13 puis par le dessus l'élément complémentaire 6 qui assure le maintien en position grâce à sa moitié de maillon extérieur. Les éléments 6 et 7 sont alors solidarisés par la goupille 5, de préférence élastique. Après rotation d'un quart de tour d'axe X, on se retrouve dans la même situation qu'au départ avec un élément 9, analogue à l'élément 7 et positionné selon son axe vertical et son semi maillon extérieur en contact avec le support de montage. On peut poursuivre le montage avec un tourillon 23 et un élément complémentaire 8, et ainsi de suite.

La chaîne formée par la succession alternée d'éléments modulaires 10a et 10b est apte à se plier selon deux directions orthogonales, d'axe Y et d'axe Z. La figure 11A la schématise.

## Revendications

1. Élément modulaire de chaîne (10, 10 bis) centré sur un tourillon, cet élément modulaire (10, 10 bis) étant apte à constituer une chaîne par assemblage itératif alterné, ledit élément modulaire comportant :

   - un tourillon (13, 23, 33) constituant un axe de rotation à symétrie monté libre en rotation vis-à-vis de chacun des demi-maillons (11, 15) qui s'y articulent
   - un demi-maillon intérieur (11) comportant une extrémité intérieure (12) s'articulant sur le dit tourillon et la moitié afférente du corps du dit maillon, délimité selon une section transversale à l'axe X du mouvement de la chaîne ; ce demi-maillon intérieur est un demi-maillon aval
   - un demi-maillon extérieur (15) comportant une extrémité extérieure (14) s'articulant sur le dit tourillon et la moitié afférente du corps du dit maillon, délimité selon une section transversale à l'axe X du mouvement de la chaîne, il comporte des moyens annexes aptes à éviter le glissement axial des tourillons lors du fonctionnement,

   ledit élément modulaire de chaîne étant **caractérisé en ce que** :

   - les zones de frottement (1, 2) du tourillon (13, 23, 33) avec les surfaces coopérantes de chacun des demi-maillons qui s'y articulent sont dimensionnées pour rendre sensiblement égales les intégrales des pressions de frottement d'une part entre ledit tourillon et le demi-maillon intérieur s'y articulant, et d'autre part entre ledit tourillon et le demi-maillon extérieur s'y articulant telles que l'égalité des intégrales des pressions de frottement est réalisée en satisfaisant à l'égalité ci-dessous :

$$k_i\, d_i . l_i = 2\, k_e\, d_e . l_e$$

   où $k_i$ est le coefficient de frottement entre le tourillon et le demi-maillon intérieur, $k_e$ le coefficient de frottement entre le tourillon et le demi-maillon extérieur, $d_i$ le diamètre de la zone de contact du tourillon avec le demi-maillon intérieur, $l_i$ sa hauteur selon l'axe de rotation, $d_e$ le diamètre

de la zone de contact du tourillon avec le maillon extérieur, et le la hauteur selon l'axe de rotation de chacun de ses bras.

2. Élément modulaire selon la revendication 1, dont les maillons intérieur et extérieur sont tous deux constitués de deux flasques planes alésées et cintrées en opposition, maintenues à distance avec une bague entretoise glissée autour de chaque tourillon, **caractérisé en ce que** :

   - les zones de frottement du tourillon (33) avec les surfaces coopérantes de chacun des demi-maillons qui s'y articulent ont même diamètre et même largeur et sont faites d'un même matériau, ce qui égalise exactement les couples de frottement,
   - les moyens annexes aptes à éviter le glissement axial des tourillons lors du fonctionnement sont constitués, dans les parties du tourillon qui dépassent du maillon extérieur, par un matage à une extrémité et à l'autre extrémité l'ajout d'une pièce mécanique de blocage, comme par exemple un circlips.

3. Élément modulaire de chaîne (10) selon la revendication 1 **caractérisé en ce que** :

   - les moyens aptes à éviter le glissement axial des tourillons sont constitués par un diamètre central $d_i$ du tourillon plus grand que le diamètre $d_e$ aux extrémités ($d_i > d_e$), cet élargissement central étant délimité par deux épaulements (3),
   - le demi-maillon extérieur a un corps constitué de flasques (20) maintenues en position avec jeu par une pièce formant cavalier, ce jeu étant en position et en torsion dans le plan perpendiculaire à l'axe de la chaîne.

4. Élément modulaire de chaîne selon la revendication 1 **caractérisé en ce que** les moyens aptes à éviter le glissement axial des tourillons sont constitués par l'encagement du tourillon dans le demi-maillon extérieur (15).

5. Élément modulaire de chaîne selon la revendication 1, **caractérisé en ce que** le tourillon n'a qu'un seul diamètre dans la zone où il traverse les deux demi-maillons, **en ce qu'**il possède à une extrémité un franc élargissement (38) de son diamètre et à l'autre extrémité un dispositif de blocage (37) n'exerçant pas de pression axiale sur le demi-maillon extérieur.

6. Élément modulaire de chaîne (10) selon la revendication 1, destiné à constituer par assemblage itératif une chaîne de coupe, **caractérisé en ce que** :

   - les zones de frottement (1, 2) du tourillon (13, 23, 33) avec les surfaces coopérantes de chacun des demi-maillons qui s'y articulent sont dimensionnées pour rendre sensiblement égales les intégrales des pressions en vérifiant l'égalité :

$$d_i . l_i = 2\, d_e . l_e$$

où : di est le diamètre de la zone de contact du tourillon avec le demi-maillon intérieur, li sa hauteur selon l'axe de rotation, de le diamètre de la zone de contact du tourillon avec le maillon extérieur, et le la hauteur selon l'axe de rotation de chacun de ses bras

- les moyens annexes aptes à éviter le glissement axial des tourillons lors du fonctionnement comportent un cavalier maintenant parallèles les parois du maillon intérieur au niveau du corps du maillons tout en conservant un jeu en torsion selon l'axe du déplacement X de la chaîne.

**7.** Élément modulaire de chaîne (10) selon la revendication 1, **caractérisé en ce que** :

- le tourillon est cylindrique et

- les moyens annexes aptes à éviter le glissement axial des tourillons lors du fonctionnement sont constitués par l'encagement du tourillon dans le demi-maillon extérieur, et

- le demi-maillon extérieur est doté d'un chanfrein (16) et d'élasticité de ses bras (14) permettant l'introduction à force du tourillon.

**8.** Élément modulaire de chaîne (10) selon la revendication 1, **caractérisé en ce que** :

- le tourillon possède deux épaulements symétriques qui définissent un gros diamètre $d_i$ en son centre et un plus petit diamètre $d_e$ commun à ses deux extrémités, et

- les moyens annexes aptes à éviter le glissement axial des tourillons lors du fonctionnement sont constitués par l'encagement du tourillon dans le demi-maillon extérieur, cet encagement étant réalisé par l'introduction du tourillon dans un premier alésage du maillon extérieur apte à faire passer le plus gros diamètre du tourillon, puis son déplacement vers un second alésage apte à faire passer le plus petit diamètre du tourillon, le maintien du tourillon dans cette position de travail étant assuré par une goupille.

**9.** Élément modulaire de chaîne (10) selon la revendication 1, **caractérisé en ce que** :

- le tourillon possède deux épaulements symétriques qui définissent un gros diamètre $d_i$ en

son centre et un plus petit diamètre $d_e$ commun à ses deux extrémités, et

- les moyens annexes aptes à éviter le glissement axial des tourillons lors du fonctionnement sont constitués par l'encagement du tourillon entre deux parties dissymétriques et coopérantes du maillon extérieur, aptes à tourner autour du petit axe du tourillon et à être bloqués dans cette rotation par une goupille transversale, d'axe parallèle à celui du tourillon

**10.** Assemblage (10) d'un premier élément modulaire (10a) conforme à la revendication 1, et à sa suite d'un second élément modulaire (10b) conforme à la revendication 1, orientés en référence à la direction X du maillon commun à ces deux éléments modulaires, lesdits deux éléments modulaires étant **caractérisés en ce que** :

- le premier élément modulaire (10a) a un tourillon (13) d'axe Y orthogonal à X

- le second élément modulaire (10b) a un tourillon (23) d'axe Z orthogonal à X et à Y.

**11.** Chaîne de coupe constituée par l'assemblage itératif d'un grand nombre d'éléments modulaires conformes à la revendication 4, **caractérisée en ce que** l'outil de coupe possède une liberté en torsion qui lui permet de laisser l'outil de coupe se positionner selon ses interactions avec le matériau qu'il coupe.

**Patentansprüche**

**1.** Modulares Kettenelement (10, 10bis), das auf einem Zapfen zentriert ist, wobei dieses modulare Element (10, 10bis) geeignet ist, durch alternierende iterative Montage eine Kette zu bilden und umfasst:

- einen Zapfen (13, 23, 33), der eine symmetrische Drehachse bildet, die gegenüber jedem der Halbkettenglieder (11, 15), die an ihr gelenkig verbunden sind, frei drehbar montiert ist

- ein inneres Halbkettenglied (11) mit einem inneren Ende (12), das an dem Zapfen und der zugehörigen Hälfte des Körpers des Kettenglieds gelenkig verbunden ist, das gemäß einem zur X-Achse der Kettenbewegung queren Abschnitt abgegrenzt ist, wobei dieses innere Halbkettenglied ein nachgelagertes Halbkettenglied ist

- ein äußeres Halbkettenglied (15) mit einem äußeren Ende (14), das an dem Zapfen und der zugehörigen Hälfte des Körpers des Kettenglieds gelenkig verbunden ist, das gemäß einem zur X-Achse der Kettenbewegung queren Abschnitt abgegrenzt ist, wobei es Nebenmittel umfasst, die geeignet sind, das axiale Gleiten der Zapfen während des Betriebs zu verhindern,

wobei das modulare Kettenelement **dadurch gekennzeichnet ist, dass**:

- die Reibungszonen (1, 2) des Zapfens (13, 23, 33) mit den zusammenwirkenden Oberflächen jedes der an ihm gelenkig verbundenen Halbkettenglieder so bemessen sind, dass sie die Integrale der Reibungsdrücke einerseits zwischen dem Zapfen und dem an ihm gelenkig verbundenen inneren Halbkettenglied und andererseits zwischen dem Zapfen und dem an ihm gelenkig verbundenen äußeren Halbkettenglied im Wesentlichen gleich machen, so dass die Gleichheit der Integrale der Reibungsdrücke erreicht wird, indem die nachstehende Gleichheit erfüllt wird:

$$k_i \, d_i . l_i = 2 \, k_e \, d_e . l_e$$

wobei $k_i$ der Reibungskoeffizient zwischen dem Zapfen und dem inneren Halbkettenglied ist, $k_e$ der Reibungskoeffizient zwischen dem Zapfen und dem äußeren Halbkettenglied ist, $d_i$ der Durchmesser des Kontaktbereichs des Zapfens mit dem inneren Halbkettenglied ist, $l_i$ seine Höhe entlang der Drehachse ist, $d_e$ der Durchmesser des Kontaktbereichs des Zapfens mit dem äußeren Kettenglied ist und $l_e$ die Höhe entlang der Drehachse jedes seiner Arme ist.

2. Modulares Element nach Anspruch 1, dessen innere und äußere Glieder beide aus zwei ebenen Flanschen bestehen, die gegeneinander gebohrt und gebogen sind und mit einem Abstandsring, der um jeden Zapfen geschoben wird, auf Abstand gehalten werden, **dadurch gekennzeichnet, dass**:

- die Reibungszonen des Zapfens (33) mit den zusammenwirkenden Flächen jeder der daran gelenkig verbundenen Halbkettenglieder den gleichen Durchmesser und die gleiche Breite haben und aus dem gleichen Material bestehen, wodurch die Reibungsmomente exakt ausgeglichen werden,
- die Nebenmittel, die geeignet sind, das axiale Gleiten der Zapfen während des Betriebs zu verhindern, in den Teilen des Zapfens, die über das Außenglied hinausragen, aus einer Verstemmung an einem Ende und am anderen Ende aus der Hinzufügung eines mechanischen Blockierteils, wie z. B. eines Sicherungsrings, bestehen.

3. Modulares Kettenelement (10) nach Anspruch 1, **dadurch gekennzeichnet, dass**:

- die Mittel, die geeignet sind das axiale Gleiten der Zapfen zu verhindern, durch einen zentralen Durchmesser $d_i$ des Zapfens gebildet werden, der größer ist als der Durchmesser $d_e$ an den Enden (di > $d_e$), wobei diese zentrale Erweiterung durch zwei Vorsprünge (3) begrenzt wird,
- das äußere Halbkettenglied einen Körper hat, der aus Flanschen (20) besteht, die durch ein einen Anschlag bildendes Teil mit Spiel in Position gehalten werden, wobei dieses Spiel in der zur Kettenachse senkrechten Ebene in Position und Verdrehung liegt.

4. Modulares Kettenelement nach Anspruch 1, **dadurch gekennzeichnet, dass** die Mittel, die geeignet sind das axiale Gleiten der Zapfen zu verhindern, durch das Einrasten des Zapfens in das äußere Halbkettenglied (15) gebildet werden.

5. Modulares Kettenelement nach Anspruch 1, **dadurch gekennzeichnet, dass** der Zapfen in dem Bereich, in dem er durch die beiden Halbkettenglieder verläuft, nur einen einzigen Durchmesser hat, dass er an einem Ende eine deutliche Erweiterung (38) seines Durchmessers und am anderen Ende eine Blockiervorrichtung (37) besitzt, die keinen axialen Druck auf das äußere Halbkettenglied ausübt.

6. Modulares Kettenelement (10) nach Anspruch 1, das dazu bestimmt ist durch iterativen Zusammenbau eine Schneidekette zu bilden, **dadurch gekennzeichnet, dass**:

- die Reibungszonen (1, 2) des Zapfens (13, 23, 33) mit den zusammenwirkenden Oberflächen jedes der daran gelenkig verbundenen Halbkettenglieder so bemessen sind, dass sie die Integrale der Drücke im Wesentlichen gleich machen, indem sie die Gleichheit überprüfen:

$$d_i . l_i = 2 \, d_e . l_e$$

wobei: $d_i$ der Durchmesser des Kontaktbereichs des Zapfens mit dem inneren Halbkettenglied, $l_i$ seine Höhe entlang der Drehachse, $d_e$ der Durchmesser des Kontaktbereichs des Zapfens mit dem äußeren Glied und $l_e$ die Höhe entlang der Drehachse jedes seiner Arme ist
- geeignete Nebenmittel, die das axiale Gleiten der Zapfen während des Betriebs verhindern, einen Anschlag umfassen, der die Wände des Innenglieds auf Höhe des Gliedkörpers parallel hält und dabei ein Torsionsspiel entlang der Bewegungsachse X der Kette beibehält.

7. Modulares Kettenelement (10) nach Anspruch 1, **dadurch gekennzeichnet, dass**:

- der Zapfen zylindrisch ist und
- geeignete Nebenmittel, die das axiale Gleiten der Zapfen während des Betriebs verhindern, aus dem Einrasten des Zapfens im äußeren Halbkettenglied bestehen, und
- das äußere Halbkettenglied mit einer Abschrägung (16) versehen ist und die Elastizität seiner Arme (14) das Einpressen des Zapfens ermöglicht.

8. Modulares Kettenelement (10) nach Anspruch 1, **dadurch gekennzeichnet, dass**:

- der Zapfen zwei symmetrische Vorsprünge hat, die einen großen Durchmesser $d_i$ in der Mitte und einen den beiden Enden gemeinsamen kleineren Durchmesser $d_e$ definieren, und
- geeignete Nebenmittel, die das axiale Gleiten der Zapfen während des Betriebs verhindern, aus dem Einrasten des Zapfens im äußeren Halbkettenglied bestehen, wobei dieses Einrasten durch das Einführen des Zapfens in eine erste Bohrung des äußeren Glieds erfolgt, die geeignet ist, den größeren Durchmesser des Zapfens durchzulassen, und dann seine Verschiebung in eine zweite Bohrung, die geeignet ist, den kleineren Durchmesser des Zapfens durchzulassen, wobei der Zapfen in dieser Arbeitsposition durch einen Splint gehalten wird.

9. Modulares Kettenelement (10) nach Anspruch 1, **dadurch gekennzeichnet, dass**:

- der Zapfen zwei symmetrische Vorsprünge hat, die einen großen Durchmesser $d_i$ in der Mitte und einen den beiden Enden gemeinsamen kleineren Durchmesser $d_e$ definieren, und
- geeignete Nebenmittel, die das axiale Gleiten der Zapfen während des Betriebs verhindern, aus dem Einrasten des Zapfens zwischen zwei asymmetrischen und zusammenwirkenden Teilen des Außenglieds bestehen, die geeignet sind sich um die kleine Achse des Zapfens zu drehen und in dieser Drehung durch einen Querstift blockiert zu werden, dessen Achse zur Achse des Zapfens parallel ist.

10. Zusammenbau (10) eines ersten modularen Elements (10a) gemäß Anspruch 1, und einem nachfolgenden zweiten modularen Element (10b) gemäß Anspruch 1, orientiert in Bezug auf die X-Richtung des den beiden modularen Elementen gemeinsamen Kettengliedes, wobei die beiden modularen Elemente **dadurch gekennzeichnet sind, dass**:

- das erste modulare Element (10a) einen Zapfen (13) mit einer zur X-Achse orthogonalen Y-Achse hat

- das zweite modulare Element (10b) einen Zapfen (23) mit einer zur X- und Y-Achse orthogonalen Z-Achse hat.

11. Schneidekette, die aus dem iterativen Zusammenbau einer großen Anzahl von modularen Elementen besteht, die dem Anspruch 4 entsprechen, **dadurch gekennzeichnet, dass** das Schneidwerkzeug eine Torsionsfreiheit besitzt, die es dem Schneidwerkzeug ermöglicht, sich entsprechend seiner Wechselwirkungen mit dem Material, das es schneidet, positionieren zu lassen.

**Claims**

1. A modular chain element (10, 10bis) centred on a journal, this modular element (10, 10bis) being capable of constituting a chain by alternate iterative assembly, said modular element including:

- a journal (13, 23, 33) constituting a symmetrical axis of rotation mounted to rotate freely relative to each of the half-links (11, 15) hinged thereto
- an internal half-link (11) including an internal end (12) hinged to said journal and the corresponding half of the body of said link, delimited in a cross-section transverse to the axis X of the chain movement; this internal half-link is a downstream half-link
- an external half-link (15) including an external end (14) hinged to said journal and to the corresponding half of the body of said link, delimited in a cross-section transverse to the axis X of the movement of the chain,
- it includes ancillary means capable of avoiding axial slippage of the journals during operation,

said modular chain element being **characterised in that**:

- the friction zones (1, 2) of the journal (13, 23, 33) with the cooperating surfaces of each of the half-links hinged thereto are dimensioned so as to make the integrals of the friction pressures substantially equal, on the one hand, between said journal and the internal half-link hinged thereto and, on the other hand, between said journal and the external half-link hinged thereto, such that the equality of the integrals of the friction pressures is achieved by satisfying the equality below:

$$k_i \, d_i.l_i = 2 \, k_e \, d_e.l_e$$

where ki is the coefficient of friction between the journal and the internal half-link, $k_e$ the coeffi-

cient of friction between the journal and the external half-link, $d_i$ the diameter of the contact zone of the journal with the internal half-link, $l_i$ its height along the axis of rotation, $d_e$ the diameter of the contact zone of the journal with the external link, and $l_e$ the height along the axis of rotation of each of its arms.

2. The modular element according to claim 1, the internal and external links of which are both constituted by two oppositely-bent bored planar flanges, held at a distance with a spacer ring slid around each journal, **characterised in that**:

   - the friction zones of the journal (33) with the cooperating surfaces of each of the half-links hinged thereto have the same diameter and the same width and are made of a same material, which exactly equalises the frictional torques,
   - the ancillary means for avoiding axial slippage of the journals during operation are constituted, in the parts of the journal which project from the external link, by caulking at one end and, at the other end, the addition of a mechanical blocking piece, such as a circlip, for example.

3. The modular chain element (10) according to claim 1, **characterised in that**:

   - the means capable of avoiding axial slippage of the journals are constituted by a central diameter $d_i$ of the journal greater than the diameter $d_e$ at the ends (di >$d_e$), this central widening being delimited by two shoulders (3),
   - the external half-link has a body constituted by flanges (20) held in position with play by a rider forming piece, this play being in position and in torsion in the plane perpendicular to the axis of the chain.

4. The modular chain element according to claim 1, **characterised in that** the means for preventing axial slippage of the journals are constituted by enclosing the journal into the external half-link (15).

5. The modular chain element according to claim 1, **characterised in that** the journal has only one diameter in the zone where it passes through the two half-links, **in that** it has, at one end, a clear enlargement (38) of its diameter and, at the other end, a blocking device (37) which does not exert axial pressure on the external half-link.

6. The modular chain element (10) according to claim 1, for constituting a cutting chain by iterative assembly, **characterised in that**:

   - the friction zones (1, 2) of the journal (13, 23, 33) with the cooperating surfaces of each of the half-links hinged thereto are dimensioned to make the integrals of the pressures substantially equal by satisfying the equality:

$$d_i.l_i = 2\ d_e.l_e$$

where: $d_i$ is the diameter of the contact zone of the journal with the internal half-link, $l_i$ is its height along the axis of rotation, $d_e$ is the diameter of the contact zone of the journal with the external link, and $l_e$ is the height along the axis of rotation of each of its arms
   - the ancillary means capable of avoiding axial slippage of the journals during operation include a rider keeping the walls of the internal link parallel at the body of the link while retaining torsional play along the axis of displacement X of the chain.

7. The modular chain element (10) according to claim 1, **characterised in that**:

   - the journal is cylindrical and
   - the ancillary means capable of avoiding axial slippage of the journals during operation are constituted by enclosing the journal into the external half-link, and
   - the external half-link is provided with a chamfer (16) and elasticity of its arms (14) enabling the journal to be forcibly inserted.

8. The modular chain element (10) according to claim 1, **characterised in that**:

   - the journal has two symmetrical shoulders which define a large diameter $d_i$ at its centre and a smaller common diameter $d_e$ at its two ends, and
   - the ancillary means capable of avoiding axial slippage of the journals during operation are constituted by enclosing the journal into the external half-link, this enclosing being achieved by introducing the journal into a first bore of the external link capable of passing the larger diameter of the journal therethrough, then displacing it towards a second bore capable of passing the smaller diameter of the journal therethrough, the journal being held in this working position by a pin.

9. The modular chain element (10) according to claim 1, **characterised in that**:

   - the journal has two symmetrical shoulders which define a large diameter $d_i$ at its centre and a smaller common diameter $d_e$ at its two ends, and

- the ancillary means capable of avoiding axial slippage of the journals during operation are constituted by enclosing the journal between two asymmetrical and cooperating parts of the external link, capable of rotating about the minor axis of the journal and of being blocked in this rotation by a transverse pin, the axis of which is parallel to that of the journal.

10. An assembly (10) of a first modular element (10a) in accordance with claim 1, and following it a second modular element (10b) in accordance with claim 1, oriented with reference to the direction X of the link common to these two modular elements, said two modular elements being **characterised in that**:

   - the first modular element (10a) has a journal (13) with axis Y orthogonal to X
   - the second modular element (10b) has a journal (23) with axis Z orthogonal to X and Y.

11. A cutting chain constituted by the iterative assembly of a large number of modular elements in accordance with claim 4, **characterised in that** the cutting tool has torsional freedom which allows it to be positioned according to its interactions with the material it is cutting.

Fig. 1

Fig. 2

Fig. 3

Fig. 4

13

30

37

10

36

38

Fig. 5 A

36

13

37

Fig. 5 B

Fig. 6 A

Fig. 6 B

Fig. 6 C

14

16

15

11

A

B

Fig 7

Fig. 7C

Fig. 7 D

$d_e$

$d_i$

Fig. 8A

99

⌀5

⌀17,1

⌀15,1

5

Fig. 8B

Fig. 8C

10 bis

10

Fig. 8D

$d_i$

$d_e$

Fig. 9A

99

$\phi$5

$\phi$17,1

$\phi$15,1

Fig. 9B

## Fig. 10 A

## Fig. 10 B

Fig. 11 A

Fig. 11 B

**EP 3 150 882 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1155796 A1, Belotti
- US 6857349 B2, Duquet
- DE 8530697
- WO 2008041263 A1, Fantini
- FR 2961572
- FR 2055876